# FASCICULE DE BREVET EUROPEEN

(11) **EP 3 463 867 B1**
(45) Date de publication et mention de la délivrance du brevet: **07.07.2021**
(21) Numéro de dépôt: 17730850.9
(22) Date de dépôt: 17.05.2017
(51) Int. Cl.: B32B 17/10, C03C 27/12, F21V 33/00, B60K 35/00, B60Q 1/52, B60Q 3/208, B60Q 9/00, G09F 13/22, G09F 13/20

(54) **VITRAGE DE SIGNALISATION LUMINEUSE, VEHICULE L'INCORPORANT ET FABRICATION**
VERGLASUNG MIT LEUCHTANZEIGE, DIESE ENTHALTENDES FAHRZEUG UND HERSTELLUNG
GLAZING WITH LIGHT SIGNALING, VEHICLE COMPRISING IT AND MANUFACTURE

(30) Priorité: 26.05.2016 FR 1654732
(43) Date de publication de la demande: 10.04.2019
(73) Titulaire: SAINT-GOBAIN GLASS FRANCE, 92400 Courbevoie (FR)
(72) Inventeur: BAUERLE, Pascal, 80700 ROYE (FR); GILLESSEN, Stephan, 52477 ALSDORF (DE); BRIS, Jean-Jacques, 71620 BEY (FR)
(74) Mandataire: Saint-Gobain Recherche
(86) Numéro de dépôt international: PCT/FR2017/051193
(87) Numéro de publication internationale: WO 2017/203132

(56) Documents cités:
- WO-A1-2013/093351
- WO-A1-2014/020249
- DE-A1-102013 003 686
- US-A1- 2005 238 857
- US-A1- 2009 114 928

## Description

L'invention concerne un vitrage de signalisation lumineuse ainsi qu'un véhicule comportant un tel vitrage et la fabrication d'un tel vitrage.

Les pare brises intègrent de plus en plus des affichages à tête haute ('HUD' en anglais).

Le document DE102013003686 décrit un vitrage feuilleté lumineux formant pare brise de véhicule automobile intégrant des diodes sur une carte à circuit imprimé (PCB pour 'printed circuit board' en anglais) pour délivrer des signaux lumineux d'alerte au conducteur.

Plus précisément dans le mode de réalisation en relation avec la figure 2 de ce document, le pare-brise de signalisation lumineuse comprenant :
- un vitrage feuilleté comportant :
   - un premier vitrage formant vitrage extérieur avec des première et deuxième faces principales
   - un intercalaire de feuilletage
   - un deuxième vitrage formant vitrage intérieur avec des troisième et quatrième faces principales,
   les deuxième et troisième faces étant les faces internes du vitrage
- un ensemble de diodes sur une carte à circuit imprimé aptes à émettre une lumière de signalisation, rouge, d'avertissement au conducteur
- chaque diode ayant une face émettrice émettant en direction du verre intérieur,
- l'intercalaire de feuilletage ayant une ouverture traversante ménagée tout autour de la carte PCB pour son intégration.

Le taux de rebut de ce vitrage peut être amélioré et par la même le cout de fabrication réduit.

A cet effet, la présente demande a pour premier objet un vitrage de signalisation lumineuse (interne) pour pare-brise de véhicule comprenant :
- un vitrage feuilleté comportant :
   - un premier vitrage, en verre minéral, éventuellement clair, extraclair ou teinté notamment gris ou vert, de préférence bombé, formant vitrage extérieur, avec des première et deuxième faces principales respectivement dites face F1 et face F2, d'épaisseur de préférence pour un vitrage automobile d'au plus 2,5mm, même d'au plus 2,2mm - notamment 1,9mm, 1,8mm, 1,6mm et 1,4mm- ou même d'au plus 1,3mm ou d'au plus 1mm

   - un deuxième vitrage, en verre minéral, de préférence bombé et de préférence clair ou extraclair voire teinté, formant vitrage intérieur, avec des troisième et quatrième faces principales respectivement face F3 et face F4, d'épaisseur pour un vitrage automobile de préférence inférieure à celle du premier vitrage, même d'au plus 2,2mm - notamment 1,9mm, 1,8mm, 1,6mm et 1,4mm- ou même d'au plus 1,3mm ou d'au plus 1mm, l'épaisseur totale des premier et deuxième vitrages étant de préférence strictement inférieure à 4mm, même à 3,7mm
   - entre la face F2 et la face F3 qui sont les faces internes du vitrage feuilleté, un intercalaire de feuilletage, éventuellement clair, extraclair ou teinté notamment gris ou vert, en matière polymérique de préférence thermoplastique et mieux encore en polyvinylbutyral (PVB), d'épaisseur e1 pour un vitrage automobile de préférence d'au plus 1,8mm, mieux d'au plus 1,2mm et même d'au plus 0,9mm (et mieux d'au moins 0,3mm et même d'au moins 0,5mm), notamment en retrait du chant du premier vitrage d'au plus 2mm et en retrait du chant d'un deuxième vitrage d'au plus 2mm, intercalaire de feuilletage ayant une face principale FA côté face F2 (et même en contact adhésif) et une face principale FB côté face F3 (et même en contact adhésif)
- au moins une diode électroluminescente inorganique et de préférence un ensemble de diodes électroluminescentes inorganiques par exemple sur une face dite avant en regard de la face F3, face avant d'un support de diodes, chaque diode étant (ayant une face émettrice) apte à émettre une lumière de signalisation en direction de la face F3, - chaque diode ayant une tranche-, chaque diode (avec ou sans optique) étant d'épaisseur e2 de préférence d'au moins 0,2mm et submillimétrique et le support à diodes éventuel étant d'épaisseur e'2 de préférence d'au plus 0,2mm et e'2≤e1 -notamment e2+e'2≤e1-l'intercalaire de feuilletage ayant une ouverture
Et, selon l'invention :
le vitrage comporte en outre un ensemble de fils électroconducteurs ancrés sur une face dite Fw de l'intercalaire de feuilletage qui est soit la face FA soit la face FB (de préférence)
et
pour chaque diode, l'intercalaire de feuilletage comprend en face opposée à la face Fw, dite face F' (de préférence la face FA), une ouverture borgne logeant la diode (entourant la tranche de la diode), et notamment l'intercalaire de feuilletage est dans l'espace dit interdiodes entre diodes voisines qui sont dans des ouvertures borgnes distinctes,
et/ou pour un groupe des diodes, l'intercalaire de feuilletage comprend en face opposée à la face Fw, dite face F' (de préférence la face FA), une ouverture qui est borgne et commune logeant (entourant) ledit groupe de diodes
l'épaisseur restante Hf de l'intercalaire de feuilletage entre Fw et le fond de l'ouverture borgne étant de préférence d'au moins 0,1mm et même 0,2mm et d'au plus 0,5mm et même d'au plus 0,3mm
et de préférence (la surface avant de) la diode (ou de chaque diode dudit groupe) est en contact avec le fond délimitant l'ouverture borgne ou est espacée du fond d'au plus 0,2mm ou d'au plus 0,1mm.

La découpe totale tout autour de la carte PCB comme pratiqué dans l'art antérieur augmente le risque de mauvais assemblage (bulles, délamination, défauts esthétiques). Aussi, la présente invention propose des découpes locales de l'intercalaire de feuilletage qui sont en outre choisies borgnes pour ne pas abimer les fils électroconducteurs.

De manière similaire, la présente demande a pour deuxième objet un vitrage de signalisation (externe) de véhicule choisi parmi une lunette arrière et une vitre latérale comprenant :
- un vitrage feuilleté comportant :
   - un premier vitrage, en verre minéral, notamment bombé éventuellement clair, extraclair ou (de préférence) teinté notamment gris ou vert, formant vitrage extérieur, avec des première et deuxième faces principales respectivement dites face F1 et face F2, d'épaisseur pour un vitrage automobile de préférence d'au plus 2,5mm, même d'au plus 2,2mm - notamment 1,9mm, 1,8mm, 1,6mm et 1,4mm- ou même d'au plus 1,3mm ou d'au plus 1mm
   - un deuxième vitrage, en verre minéral, notamment bombé, éventuellement clair, extraclair voire teinté notamment gris ou vert formant vitrage intérieur, avec des troisième et quatrième faces principales respectivement face F3 et face F4, d'épaisseur pour un vitrage automobile de préférence inférieure à celle du premier vitrage, même d'au plus 2mm - notamment 1,9mm, 1,8mm, 1,6mm et 1,4mm- ou même d'au plus 1,3mm ou d'au plus 1mm, l'épaisseur totale des premier et deuxième vitrages étant de préférence strictement inférieure à 4mm, même à 3,7mm
      entre la face F2 et la face F3 les faces internes du vitrage feuilleté, un intercalaire de feuilletage, éventuellement clair, extraclair ou teinté notamment gris ou vert, en matière polymérique de préférence thermoplastique et mieux encore en PVB, d'épaisseur e1 pour un vitrage automobile de préférence d'au plus 1,8mm, mieux d'au plus 1,2mm et même d'au plus 0,9mm (et mieux d'au moins 0,3 ou 0,38mm et même d'au moins 0,7mm), notamment en retrait du chant du premier vitrage d'au plus 2mm et en retrait du chant d'un deuxième vitrage d'au plus 2mm, intercalaire de feuilletage ayant une face principale FA côté face F2 (et même en contact adhésif) et une face principale FB côté face F3 (et même en contact adhésif)
- au moins une diode électroluminescente inorganique et de préférence un ensemble de diodes électroluminescentes inorganiques, apte à émettre en direction de la face F2 une lumière de signalisation, -chaque diode ayant une face émettrice (d'une puce semi-conductrice)- chaque diode ayant une tranche,
l'intercalaire de feuilletage ayant une ouverture borgne
Et, selon l'invention,
le vitrage comporte en outre un ensemble de fils électroconducteurs ancrés sur une face dite Fw de l'intercalaire de feuilletage qui est soit la face FA (de préférence) soit la face FB
et
pour chaque diode, l'intercalaire de feuilletage comprend en face opposée à la face Fw, dite face F' (qui est de préférence la face FB), une ouverture borgne logeant (entourant la tranche de) la diode, et notamment l'intercalaire de feuilletage est dans l'espace dit interdiodes, entre diodes voisines qui sont dans des ouvertures borgnes distinctes
et/ou pour un groupe des diodes, l'intercalaire de feuilletage comprend en face opposée à la face Fw, dite F' qui est de préférence la face FB), une ouverture qui est borgne et commune (entourant) logeant ledit groupe de diodes
l'épaisseur restante Hf de l'intercalaire de feuilletage entre Fw et le fond de l'ouverture borgne étant de préférence d'au moins 0,1mm et même d'au moins 0,2mm et d'au plus 0,5mm et même d'au plus 0,3mm
et de préférence la (surface avant de) la diode étant en contact avec le fond délimitant l'ouverture borgne ou est espacée du fond d'au plus 0,2mm ou d'au plus 0,1mm.
Par vitre latérale selon l'invention entend aussi custode.
Dans un mode de réalisation avantageux de la présente invention, une zone de chauffage du vitrage comporte une pluralité de tels fils métalliques individuels, appelés « fils métalliques chauffants » qui relient les « busbars » entre eux. Le courant de chauffage passe par ces fils métalliques individuels. Les fils sont avantageusement très minces de manière à ne pas, ou seulement très peu, détériorer la transparence de la vitre. De préférence, les fils métalliques ont une épaisseur inférieure ou égale à 0,1 mm, en particulier comprise entre 0,02 et 0,04 mm, et idéalement entre 0,024 mm et 0,029 mm. Les fils métalliques contiennent de préférence du cuivre, du tungstène, de l'or, de l'argent ou de l'aluminium ou un alliage d'au moins deux de ces métaux. L'alliage peut également contenir du molybdène, du rhénium, de l'osmium, de l'iridium, du palladium ou du platine.
Les fils métalliques sont de préférence isolés électriquement, par exemple au moyen de gaines. Ceci est particulièrement utile lorsque les fils sont sous tension de la vitre.

L'intercalaire de feuilletage est de préférence au plus près de la ou des diodes et de préférence en tenant de la tolérance de positionnement de la ou des diodes lors de la découpe choisie de préférence plus large que la largeur de la ou des diodes (même si l'intercalaire a de la souplesse).

Dans un mode de réalisation préféré l'intercalaire de feuilletage, notamment en PVB (ou PVB/ film plastique tel que PET avec ou sans couche électroconductrice/ PVB) est espacé d'au plus 0,5mm mieux d'au plus 0,2mm voire d'au plus 0,1mm de la tranche de diode et même est en contact avec la tranche de diode. En particulier, même si l'ouverture borgne demeure, est remplie par la diode ou le groupe de diodes, elle peut être de largeur plus réduite après feuilletage qu'avant feuilletage. L'intercalaire peut en effet fluer lors du feuilletage jusqu'à ce que la tranche de la diode (des diodes du groupe de diodes) et/ou en contact avec la surface avant de la diode. (des diodes du groupe de diodes) Dans un mode de réalisation préféré, e1 est subcentimétrique, de préférence entre 0,7 et 0,9mm (en particulier d'au moins 0,6 mm pour le PVB classique et par exemple d'au moins 0,8mm pour le PVB acoustique), et de préférence e1-e2<0,5mm et même de préférence e1-e2 allant de 0,1 à 0,3mm. e1 est de préférence ici l'épaisseur entre la face F2 et la face F3.

En particulier, dans un mode de réalisation, l'intercalaire de feuilletage est formé à partir d'un feuillet unique (clair, extraclair ou teinté), de préférence PVB, avec la ou les ouvertures borgnes, et la face arrière de la carte PCB est contre ou collée à la face F2 du pare-brise ou à la face F3 de la lunette arrière ou de la vitre latérale. On préfère réaliser le ou les ouvertures borgnes sur ledit intercalaire PVB (en particulier PVB acoustique et/ou à coins).

Il peut s'agir d'un feuillet (unique) composite notamment un feuillet préassemblé : PVB/ film plastique tel que PET fonctionnel avec ou sans une couche électroconductrice/PVB). Chaque ouverture borgne est faite sur ce feuillet plutôt que de faire chaque trou traversant sur un intercalaire PVB ou PVB/PET éventuellement fonctionnel et auquel on va rajouter un autre PVB avec lesdits fils avant feuilletage pour former une ouverture borgne. L'un des PVB peut être acoustique. L'un des PVB comporte les fils électroconducteurs. Notamment le film plastique est entre l'ouverture borgne et la face Fw ou la face Fw est entre le trou borgne et le film plastique.

Le film plastique fonctionnel avec ou sans couche électroconductrice peut couvrir de préférence la surface du vitrage feuilleté. Le film plastique fonctionnel seul peut par exemple être teinté, coloré (intentionnellement). Le film plastique avec couche électroconductrice peut être transparent et incolore.

On préfère que la couche électroconductrice reste intègre (à des fins esthétiques, pour éviter les points chauds etc) et même le film plastique tel que PET reste intègre, sans trou borgne ou traversant -donc sans une partie de ladite ouverture borgne-.

Par exemple, l'intercalaire de feuilletage comporte de préférence un PVB/ film plastique tel que le PET avec une couche électroconductrice/PVB avec lesdits fils et:
- la couche électroconductrice (notamment transparente) est pleine et par exemple entre le fond du trou traversant et la face Fw, (de préférence face FB pour le pare-brise, et face FB pour le vitrage latéral ou la lunette), notamment est en contact avec le PVB en regard de la ou chaque ouverture borgne
- et/ou le film plastique est plein (notamment transparent) tel que le PET par exemple est entre le fond du trou traversant et la face Fw (de préférence face FB pour le pare-brise, et face FB pour le vitrage latéral ou la lunette).

Par exemple, l'intercalaire de feuilletage comporte de préférence un PVB avec lesdits fils/ film plastique tel que le PET avec une couche électroconductrice/PVB et:
- la couche électroconductrice (notamment transparente) est pleine
- et/ou le film plastique est plein (notamment transparent) tel que le PET.

Dans un autre mode de réalisation, l'intercalaire de feuilletage, de préférence PVB, peut être également présent entre la face arrière de la carte PCB et la face F2 du pare-brise ou entre la face arrière de la carte PCB et la face F3 de la lunette arrière ou de la vitre latérale. On rajoute un feuillet (qui peut être plus mince d'épaisseur par exemple d'au plus 0,4mm et même d'au plus 0,2mm, notamment clair, extraclair ou teinté) par exemple côté face arrière de la carte PCB. Ce feuillet est de préférence de même étendue que le feuillet -notamment PVB (ou PVB/PET avec ou sans couche électroconductrice/PVB)- avec la ou les ouvertures borgnes.

L'intercalaire peut être en surépaisseur la plus faible possible (par rapport aux diodes) pour ne pas risquer de générer trop de bulles d'air.

On peut préférer utiliser une unique feuille (de PVB) pour l'intercalaire avec la ou les ouvertures borgnes pour des raisons économiques (cout matière et simplement une série de découpes locales à faire).

L'usage d'une seule feuille (de PVB) de préférence d'épaisseur standard de 0,6 à 0,9mm (pour davantage de sécurité plutôt que 0,38mm) est rendue possible par le choix de nouvelles diodes de puissance ultraminces, très récemment disponibles sur le marché.

L'ouverture borgne peut être dans un PVB éventuellement acoustique et/ou en coin, notamment pour un pare-brise, ou encore dans un élément composite (préassemblé, collé) PVB/film plastique ou PVB/film plastique/PVB, le film plastique, de préférence un PET, étant porteur d'une couche fonctionnelle notamment électroconductrice (contrôle solaire etc). Pour simplifier la réalisation, l'élément composite peut être un élément préassemblé avec la formation de la ou les ouvertures borgnes. En particulier la couche fonctionnelle (électroconductrice) est de préférence pleine, n'est pas traversée par la ou les ouvertures borgnes.

L'ouverture borgne est de préférence de largeur (et longueur) d'au plus 20mm et même d'au plus 15mm.

La ou l'une des diodes peut être un indicateur lumineux d'un interrupteur tactile de préférence capacitif entre F2 et F3 ou sur la face F4. L'indicateur lumineux peut être en face avant d'un support à diodes en regard de la face F3 et qui porte aussi des diodes pour d'autres fonctions. Comme précité, on peut utiliser deux (ou plusieurs) feuillets (de préférence de PVB) comme indiqué pour un renfort mécanique.

Par exemple :
- un feuillet avec les ouvertures borgnes d'épaisseur d'au plus 0,5mm,
- un autre feuillet d'épaisseur e'1 d'au plus 0,4mm, notamment de 0,38mm, et même d'au plus 0,2mm, notamment de 0,19mm.

Si les diodes (et la carte PCB) sont suffisamment minces on peut même inverser les épaisseurs. Par exemple :
- un feuillet (de préférence de PVB) avec les ouvertures borgnes d'épaisseur d'au plus 0,4mm notamment de 0,38mm et même d'au plus 0,2mm, notamment de 0,19mm
- un autre feuillet (de préférence de PVB) d'épaisseur d'au plus 0,4mm, notamment de 0,38mm.

Dans un mode de réalisation préféré, chaque diode, de préférence de puissance, étant un composant électronique incluant une puce semi-conductrice, et est équipée d'une enveloppe périphérique, polymérique ou céramique, encapsulant la tranche du composant électronique (et définissant la tranche de la diode), débordant sur la face avant du composant en entourant la puce semi-conductrice, l'intercalaire de feuilletage (par fluage lors du feuilletage) s'étend jusqu'à être au contact avec la surface avant, entre ladite surface avant de l'enveloppe et la face F3 du pare-brise ou la face F2 de la vitre latérale ou de la lunette arrière.

Une diode peut être de type « chip on board » ou encore tout préférentiellement un composant monté en surface (SMD en anglais) comportant alors une enveloppe périphérique (souvent dénommée « packaging »).
Dans un mode de réalisation préféré, chaque diode, de préférence de puissance, étant un composant électronique incluant au moins une puce semi-conductrice, et est équipée d'une enveloppe périphérique (souvent dénommée « packaging »), polymérique ou céramique, encapsulant la tranche du composant électronique (et définissant la tranche de la diode), entourant la puce semi-conductrice.

L'enveloppe peut correspondre à l'épaisseur maximale (hauteur) e2 de la diode. L'enveloppe est par exemple en époxy. Une enveloppe polymérique peut éventuellement se tasser (l'épaisseur finale après feuilletage peut être inférieure à l'épaisseur initiale) lors du feuilletage. L'enveloppe (polymérique) peut être opaque.

L'enveloppe (monolithique ou en deux pièces) peut comprendre une partie formant embase porteuse de la puce et une partie formant réflecteur évasée en s'éloignant de l'embase plus haute que la puce, et contenant une résine de protection et/ou une matière à fonction de conversion de couleur. On peut définir la surface avant comme la surface de cette matière couvrant la puce en retrait ou au niveau de la surface « avant » du réflecteur.

La diode peut comprendre une résine de protection ou une matière à fonction de conversion de couleur même juste sur la puce semi-conductrice. La puce-semiconductrice peut être noyée dans une matière (résine, etc).

La diode (chip on board ou SMD) peut être dénuée d'élément optique (au-dessus de la puce-semi conductrice (noyée ou non dans de la matière) pour faciliter une compacité.

De préférence les diodes sont des composants montés en surface sur la face avant d'un support de diodes notamment flexible par exemple une carte PCB et même les diodes ont une émission lambertienne ou quasi lambertienne.

Le support de diodes (carte PCB) peut être suffisamment flexible (souple) pour s'adapter aux courbures du vitrage feuilleté bombé.

Le support de diodes peut être associé à un connecteur plat s'étendant jusqu'à la tranche du vitrage et même la dépassant. On préférence un connecteur flexible s'adaptant aux courbures du vitrage, comportant un plastique par exemple PEN, polyimide. le connecteur plat peut être de largeur (dimension le long de la tranche) inférieure ou égale à la dimension du support (de diodes) notamment le long de la tranche.

Le support de diodes notamment flexible peut dépasser de la tranche du vitrage. Cela facilite l'alimentation électrique par exemple il n'est pas nécessaire de rajouter une alimentation électrique au sein du vitrage feuilleté (câble plat, fils, couches électroconductrices sur les faces F2 ou F3 des vitrages etc). Le support de diodes (flexible) peut être local par exemple couvrir moins de 10% de la surface du vitrage feuilleté, notamment dans une région périphérique du vitrage feuilleté (du pare-brise). Le support de diodes (flexible) peut sinon couvrir plus de 10% et même la surface du vitrage feuilleté. L'enveloppe peut correspondre à l'épaisseur maximale (hauteur) de la diode. L'enveloppe est par exemple en époxy. Une enveloppe polymérique peut éventuellement se tasser (l'épaisseur finale après feuilletage peut être inférieure à l'épaisseur initiale) lors du feuilletage. L'enveloppe (polymérique) peut être opaque.

La diode peut être dénuée d'élément optique (lentille etc) au-dessus de la puce-semi conductrice pour faciliter une compacité ; toutefois l'élément optique peut être suffisamment petit pour être intégrée dans le vitrage feuilleté. La diode peut comprendre une résine de protection ou une matière à fonction de conversion de couleur, classiquement sur la puce semi-conductrice. La puce-semiconductrice peut être noyée dans une matière (résine etc).

Au moment de la mise en contact de l'intercalaire de feuilletage et de la carte PCB, l'intercalaire de feuilletage peut être espacé d'au plus 0,5mm mieux d'au plus 0,1mm de la tranche des diodes et après feuilletage, du fait du fluage l'intercalaire de feuilletage peut moins espacé et même en contact avec la tranche et même déborder sur la face avant du composant en entourant la puce semi-conductrice.

De préférence les diodes sont des composants montés en surface sur la face avant de la carte PCB et même les diodes ont une émission lambertienne ou quasi lambertienne.

Dans un mode de réalisation préféré, l'intercalaire de feuilletage est en PVB, e1 allant de 0,5 à 0,9mm et même le cas échéant e'1 d'au plus 0,4mm, et les diodes sont des composants montés en surface sur la face avant d'un support de diodes flexible comme la carte PCB, e'2 est de préférence d'au plus 0,2mm mieux d'au plus 0,15mm et même d'au plus 0,05mm. Le support de diodes notamment flexible peut dépasser de la tranche du vitrage.

La largeur de la carte PCB est de préférence d'au plus 5cm, mieux d'au plus 2cm, et même d'au plus 1cm. La largeur (ou longueur) d'une diode avec une seule puce semi conductrice, généralement diode de forme carrée, est de préférence d'au plus 5mm. La longueur d'une diode avec une pluralité des puces semi- conductrices (typiquement entourées par l'enveloppe), généralement de forme rectangulaire, est de préférence d'au plus 20mm mieux d'au plus 10mm.

La carte PCB (de préférence suffisamment souple pour s'adapter au vitrage feuilleté bombé) peut être collée ou plaquée par sa face arrière contre la face F2 pour le pare-brise ou la face F3 pour la lunette arrière ou le vitrage latéral, collage par un adhésif (colle ou de préférence adhésif double face), d'épaisseur e3 avec e3≤0,1mm, mieux e3≤0,05mm -même tel que e3+e'2 est d'au plus 0,15mm mieux d'au plus 0,1mm-. Avec cet adhésif on préfère e3+e2+e'2≤e1 (surtout si présent en face arrière du PCB dans la zone des diodes).

Le collage est sur toute la longueur ou ponctuel, dans zone à diodes et/ou hors diodes. Les diodes sont de préférence des diodes de puissances qui sont en fonctionnement sous alimentées électriquement en courant, de préférence avec un facteur d'au moins 10 et même d'au moins 20 (donc intensité /10 voire intensité/20) notamment de façon à maintenir une température inférieure à la température de ramollissement du matériau polymérique de l'intercalaire de feuilletage, en particulier d'au plus 130°C, mieux d'au plus 120°C et même d'au plus 100°C.

Ces diodes garantissent une excellente efficacité sans trop chauffer.

Par exemple pour des diodes alimentées en courant à 1A on choisit entre 50 et 100mA.

Les diodes inorganiques sont par exemple à base de phosphure de gallium, de nitrure de gallium, de gallium et d'aluminium.

La carte PCB peut être suffisamment souple (flexible) pour s'adapter aux courbures du vitrage feuilleté bombé.

Dans un mode de réalisation, la carte PCB comporte un film en matière plastique de préférence transparent (si nécessaire), de préférence en poly(éthylène téréphtalate) ou PET ou en polyimide, pourvue de pistes conductrices, notamment métalliques ou en oxyde conducteur transparent, de préférence transparentes et équipée des diodes montées en surface. Les pistes conductrices sont imprimées ou déposées par toute autre méthode dépôt par exemple dépôt physique en phase vapeur. Les pistes conductrices peuvent aussi être des fils. On préfère que les pistes conductrices et le film soient transparents lorsqu'ils sont visibles c'est-à-dire qu'ils ne sont pas masquées par un élément (couche) de masquage (tel qu'un émail voire une peinture etc) notamment en face F4 ou F3 pour le pare-brise en face F2 pour le vitrage latéral ou la lunette arrière. Les pistes conductrices peuvent être transparentes de par la matière transparente ou par leur largeur suffisamment fine pour être (quasi) invisibles. Les pistes visibles ou non peuvent être en cuivre par exemple isolées par des lignes (retrait de matière par gravure laser etc).

Des films de polyimide ont une meilleure tenue en la température plus élevée par rapport à l'alternative PET ou même PEN (poly(naphtalate d'éthylène).

De préférence, la carte PCB s'étend au moins jusqu'à la tranche du vitrage feuilleté, et de préférence dépasse de la tranche, de préférence en forme coudée mieux en L, et entre la face arrière de la carte PCB et la face F2 du pare-brise ou la face F3 de la lunette arrière ou de la vitre latérale, est logé un adhésif étanche à l'eau liquide d'épaisseur d'au plus 0,1mm et mieux d'au plus 0,05mm, notamment un adhésif double face. On préfère un tel adhésif à une solution de surmoulage. Il peut s'agir de l'adhésif de préférence transparent utilisé pour fixer (toute) la carte PCB.

Le support de diodes, en particulier la carte PCB, coudé notamment en forme de L peut comporter une première partie (rectangulaire) porteuse des diodes (avec le coude) et une deuxième partie pour la connectique (rectangulaire) débouchant et même dépassant sur la tranche du vitrage feuilleté. Cette deuxième partie peut être (beaucoup) plus longue que la première partie.

Le vitrage (pare-brise, lunette arrière, vitrage latérale) peut comporter plusieurs signalisations lumineuses avec la même fonction ou des fonctions distinctes. Le pare-brise peut comporter plusieurs signalisations lumineuses avec la même fonction ou des fonctions distinctes.

Pour avoir une surface de signalisation plus grande et/ou des couleurs différentes on peut avoir sur une même carte PCB plusieurs rangées de diodes ou encore accoler deux cartes PCB (au moins accoler les zones des PCB avec diodes).

Sur une carte PCB donnée, les diodes peuvent émettre la même lumière ou une lumière de couleurs différente, de préférence pas en même temps.

Classiquement, les diodes sont en (au moins) une rangée formant une bande lumineuse le long
- d'un bord longitudinal du pare-brise (côté conducteur notamment) ou de la lunette arrière ou de la vitre latérale, le support de diodes peut dépasser d'une tranche d'un bord latéral et même de l'autre bord latéral ou encore et/avec une partie de connectique dépassant de la tranche du bord longitudinal-
- ou d'un bord latéral du pare-brise (côté conducteur notamment) ou de la lunette arrière ou de la vitre latérale, le support de diodes peut dépasser d'une tranche d'un bord longitudinal et même de l'autre bord longitudinal et/ou encore avec une partie de connectique dépassant de la tranche du bord latéral.

Naturellement, l'intercalaire de feuilletage peut être en contact direct avec la face F3 (respectivement F2) ou avec un revêtement fonctionnel classique sur cette face, notamment un empilement de couches minces (incluant une ou des couches argent) tel que : couche chauffante, antennes, couche de contrôle solaire ou basse émissivité ou une couche décor ou de masquage (opaque) comme un émail généralement noir.

Le support de diodes notamment la carte PCB peut être dans le clair de vitre, espacée ou non des bords opaques (cadre émaillé en général). Par exemple on dispose la carte PCB le long d'un bord latéral ou longitudinal ou encore plus centrale notamment sensiblement à mi-chemin des bords latéraux et même plus proche du bord longitudinal inférieur (en position monté) que du bord longitudinal supérieur. Le plus souvent, il y a une couche opaque en face F2 et une couche opaque en face F4 voire F3. Leurs largeurs sont identiques ou distinctes.

Le support de diodes notamment la La carte PCB (au moins la zone avec les diodes ou au moins la zone sans les diodes si PCB coudé notamment en L) peut être agencée dans ou au voisinage de la région d'une couche opaque, notamment un émail (noir), le long d'un bord périphérique du vitrage feuilleté, généralement en face F2 et/ou face F4 ou encore en face F2 et/ou en face F3.

Dans un premier mode de réalisation, la carte PCB peut même être disposée dans une région du pare-brise dans laquelle le verre extérieur est entièrement (ou partiellement) opaque par la couche opaque (la plus externe) comme un émail (noir) de préférence en F2. Cette couche opaque peut être dans cette région du pare-brise une couche pleine (fond continu) ou une couche avec des épargnes (surfaces sans couche opaque) par exemple couche sous forme d'un ensemble de motifs géométriques (en rond, rectangle, carré etc),ou non, de taille identiques ou distinctes (de taille de plus ou plus petite en s'éloignant de la tranche et/ou motifs de plus ou plus espacés en s'éloignant de la tranche).

Dans ce premier mode de réalisation, les diodes voire toute la carte PCB peut être visible uniquement à l'intérieur, pour afficher les informations - comme un avertissement (anti collisions) à un conducteur ou même à toute autre personne - sans limiter la vue du conducteur à travers le pare-brise.

La carte PCB peut être disposée dans une région du pare-brise dans laquelle le verre intérieur est opaque par une couche opaque (la plus interne) comme un émail (noir) de préférence en F4 voire en F3. Cette couche opaque comporte alors au moins des épargnes (par un masque au dépôt ou par retrait notamment laser) au droit des diodes. Cette couche opaque par exemple est sous forme d'un ensemble de motifs opaques géométriques ou non (en rond, rectangle, carré etc), de taille identiques ou distinctes (de taille de plus ou plus petite et/ou avec motifs de plus ou plus espacés en s'éloignant de la tranche). Des zones entre les motifs opaques sont au droit des diodes. Dans ces zones on peut ajouter une couche diffusante comme un émail blanc en face F4 voire en F3. La couche diffusante peut être espacée ou jointive avec cette couche opaque (la plus interne). De préférence, le pare-brise comporte en plus la couche opaque en face F2.

La carte PCB peut être disposée dans une région de la lunette arrière ou de la vitre latérale dans laquelle le verre intérieur est opaque par la couche opaque (la plus interne) de préférence en F4 voire en F3. Dans ce mode de réalisation, les diodes voire toute la carte PCB est visible uniquement à l'extérieur, pour former toute sorte de feu ou information. Cette couche opaque peut être dans cette région de la lunette arrière ou de la vitre latérale une couche pleine (fond continu) ou une couche avec des épargnes (surfaces sans couche opaque) par exemple couche sous forme d'un ensemble de motifs géométriques (en rond, rectangle, carré etc),ou non, de taille identiques ou distinctes (de taille de plus ou plus petite et/ou motifs de plus ou plus espacés en s'éloignant de la tranche) en particulier un émail. De préférence, la lunette arrière ou la vitre latérale comporte en plus la couche opaque en face F4 voire F3.

La carte PCB peut être disposée dans une région de la lunette arrière ou de la vitre latérale dans laquelle le verre extérieur est opaque par une couche opaque (la plus externe) comme un émail (noir) de préférence en F2. Cette couche opaque comporte alors au moins des épargnes (par un masque au dépôt ou par retrait notamment laser) au droit des diodes. Cette couche opaque par exemple est sous forme d'un ensemble de motifs opaques géométriques ou non (en rond, rectangle, carré etc), de taille identiques ou distinctes (de taille de plus ou plus petite et/ou avec motifs de plus ou plus espacés en s'éloignant de la tranche). Des zones entre les motifs opaques sont au droit des diodes. Dans ces zones on peut ajouter une couche diffusante comme un émail blanc en face F2. La couche diffusante peut être espacée ou jointive avec cette couche opaque. De préférence, la lunette arrière ou la vitre latérale comporte en plus la couche opaque en face F4 (ou F3).

Pour un confort visuel notamment, le pare-brise peut comporter sur la face F3 ou (mieux) la face F4 en regard des diodes une couche diffusante, de préférence blanche, en particulier un émail (blanc). Pour un confort visuel notamment, le vitrage latéral ou la lunette arrière peut comporter en regard des diodes une couche diffusante sur la face F2 (voire F1), de préférence blanche en particulier un émail (blanc). On peut ainsi avoir un ensemble de motifs diffusants (blancs) de la taille des diodes (de préférence de taille adaptée pour éviter que les bords ne soient sombres à l'état allumé).

La couche diffusante peut être dans une zone du clair de vitre ou comme déjà indiquée dans une zone périphérique avec une couche opaque, telle que l'émail noir, avec des épargnes au droit des diodes.

En particulier, pour la lunette arrière ou la vitre latérale, les diodes peuvent être arrangées pour former une ou des lettres, un symbole (triangle, symbole de panne ou de danger etc), une flèche, en utilisant une ou plusieurs cartes PCB...

En particulier, pour le pare-brise, les diodes peuvent être arrangées pour former une ou des lettres, un symbole (triangle, symbole de panne ou de danger etc), une ou des flèches (gauche et droite indicatrices du clignotant), en utilisant une ou plusieurs cartes PCB. On peut avoir autant de carte PCB et ensemble de diodes tel que décrit précement que nécessaire. Par exemple :
- un premier ensemble le long d'un bord latéral gauche de préférence plus près du bord longitudinal bas que haut,
- un deuxième ensemble le long d'un bord latéral droit de préférence plus près du bord longitudinal bas que haut,
- un troisième ensemble le long du bord longitudinal bas de préférence côté conducteur,
- un quatrième ensemble au centre de préférence plus près du bord longitudinal bas que haut

On peut changer de couleur en fonction du degré de sécurité ou encore allumer plus ou moins de diodes en fonction du degré de sécurité.

L'invention concerne bien entendu tout véhicule comportant au moins un vitrage de signalisation lumineuse tel que décrit précédemment et en particulier :
- le vitrage de signalisation lumineuse formant pare-brise est un moyen anti collision (sur (auto)route ou même en ville) notamment par détection d'une distance à la voiture (ou tout autre moyen de locomotion tel que moto, vélo, trottinette etc ou encore un animal) de devant (ou d'un objet ou d'une personne comme un piéton) trop courte, ou encore par détection d'une distance trop courte d'un objet ou d'une personne ou d'une voiture ou tout autre moyen de locomotion (vélo, moto etc) sur le côté de la voiture, côté gauche ou côté droit, et allumage des diodes de préférence en rouge ou, plus progressivement, en orange (ambre) puis en rouge, ou même avec trois ou plus niveaux donc couleurs
- ou le vitrage de signalisation lumineuse formant la lunette arrière est un vitrage incluant un feu stop (par exemple au moins 60cd), un troisième feu stop (par exemple entre 25 et 80cd), un clignotant (par exemple au moins 50cd), un feu de détresse ou un feu de repérage du véhicule
- le vitrage de signalisation lumineuse formant vitrage latérale est un vitrage incluant un feu de détresse (en situation de panne etc) ou un feu de repérage du véhicule (à l'arrêt, sur un parking, en ville etc) un répétiteur de clignotant (vitrage latérale avant -notamment proche du rétroviseur- pour être vu quand le véhicule est doublé, par exemple entre 0,6 et 20cd).

On peut aussi former feux de gabarit, feux de stationnement, feux de position latéraux.

Comme diodes on peut citer la gamme des OSLON BLACK FLAT vendue par OSRAM. Pour la lumière rouge, on peut citer comme diode vendue par OSRAM : OSLON BLACK FLAT Lx H9PP. Pour la lumière orange (ambre), on peut citer comme diode vendue par OSRAM : LCY H9PP. Pour la lumière blanche on peut citer comme diode vendue par OSRAM : LUW H9QP ou KW HxL531.TE où x = est nombre de puces dans la diode (par exemple 4 ou 5).

Comme PCB flexible on peut citer la gamme des produits AKAFLEX® (notamment PCL FW) de la société KREMPEL.

Dans un mode de réalisation du véhicule, il comporte au moins une unité de commande pour piloter les diodes et même au moins un capteur notamment pour détecter les situations dangereuses. Une unité de commande pour piloter les diodes peut être dans le vitrage feuilleté, sur ou en dehors de la carte PCB.

L'invention concerne enfin un procédé du vitrage de signalisation lumineuse tel que décrit précédemment qu'il comporte les étapes suivantes:
- découpe automatique (robotisé) de l'intercalaire de feuilletage sous forme d'une feuille (de PVB de préférence) porteuse desdits fils életroconducteurs, feuille d'épaisseur d'au plus 0,9mm et même d'au plus 0,4mm pour former des ouvertures borgnes locales (géométrique : rondes, carrés, rectangulaires, notamment de la même forme que les diodes), de préférence autant (et pas plus) d'ouvertures borgnes que des diodes ou comportant une première feuille d'épaisseur d'au plus 0,9mm pour former des ouvertures borgnes locales, l'intercalaire de feuilletage comportant en outre une deuxième feuille notamment d'épaisseur d'au plus 0,4mm et même d'au plus 0,2mm, feuille de préférence PVB éventuellement acoustique et/ou en coin ou multifeuillet préassemblé PVB/ film plastique tel que PET fonctionnel ou PVB/ film plastique tel que PET fonctionnel en particulier porteur d'une couche électroconductrice/PVB, film plastique tel que PET d'épaisseur d'au plus 0,2mm et même d'au plus 0,1mm ou d'au plus 0,05mm
- assemblage du vitrage feuilleté, avec des ouvertures borgnes plus grandes que la taille des diodes de préférence plus grandes d'au plus 1mm, mieux 0,5mm ou même d'au plus 0,2mm ou 0,1mm,
- une éventuelle deuxième feuille de préférence en PVB étant entre la face arrière du support à diodes notamment flexible, local, et d'épaisseur d'au plus 0,2mm et même d'au plus 0,1mm ou d'au plus 0,05mm et la face F2 du pare-brise ou entre la face arrière du support à diodes notamment flexible, local, et d'épaisseur d'au plus 0,2mm et même d'au plus 0,1mm ou d'au plus 0,05mm et la face F3 de la lunette arrière ou de la vitre latérale.

Le placement des diodes sur la face avant peut être manuel ou robotisé (plus précis).

On peut choisir un PVB classique dans le monde automobile comme le RC41 de Solutia ou d'Eastman. La carte PCB avec les diodes peut être positionnée par rapport au vitrage (côté face arrière) et contraindre la mise en place de l'intercalaire de feuilletage trouée avec la ou les ouvertures borgnes avec de préférence une découpe de l'intercalaire de feuilletage avec excès sur le contour du vitrage (et découpe de l'excédent après mise en place du vitrage côté face avant, ou encore la carte PCB avec les diodes peut être positionnée par rapport à l'intercalaire de feuilletage trouée partiellement dans son épaisseur (ouverture(s) borgne(s)) et est contraint par la mise en place de ce dernier et avec de préférence avec une découpe de de l'intercalaire de feuilletage à la forme exacte du vitrage feuilleté.

Les fils électroconducteurs peuvent être en contact avec un autre feuillet PVB (plein, acoustique , teinté, à coin etc) ou en contact avec la face F3 (pour le pare-brise de préférence) ou F2 (pour la lunette ou le vitrage latéral de préférence).

La première feuille peut être un multifeuillet préassemblé PVB/film plastique tel que PET comportant de préférence une couche électroconductrice /PVB, on réalise la ou les ouvertures borgnes dans le PVB (côté face opposée aux fils électroconducteurs, donc ouvertures de préférence côté face FA pour le pare brise et FB pour le vitrage latérale ou la lunette) sans atteindre la couche électroconductrice et de préférence le film plastique (transparent ou non) tel que le PET qui est d'épaisseur d'au plus 0,2mm mieux d'au plus 0,15mm et même d'au plus 0,05mm.

Dans un cas avec le PVB/ film plastique tel que PET comportant une couche électroconductrice ou non /PVB, le PVB avec les fils électroconducteurs comporte la ou les ouvertures borgnes et l'autre PVB sert pour ajouter une fonctionnalité (acoustique etc), Dans un cas, le PVB avec la ou les ouvertures borgnes ne comporte pas les fils électroconducteurs et l'autre PVB comporte les fils électroconducteurs. Le film plastique PET peut être une protection complémentaire des fils électroconducteurs.

On peut réaliser la ou les ouvertures borgnes sur le préassemblé PVB/ film plastique (avec ou sans couche) tel que PET/PVB avant d'ancrer les fils ou l'un des PVB peut avoir les fils avant de faire l'ouverture. Les fils électroconducteurs peuvent être sur une surface libre du préassemblé ou même sur une surface orientée vers le film plastique.

Les fils électroconducteurs peuvent être sur une surface libre du préassemblé et ensuite les fils électroconducteurs peuvent être en contact avec un autre feuillet PVB (plein, acoustique , teinté, à coin etc) ou en contact adhésif avec la face F2 ou F3.

pour le pare brise, la face FA est la face F' et est de préférence en contact adhésif avec la face F2 et/ou la face Fw est la face FB qui est de préférence en contact adhésif avec la face F3 ou en ce que pour le vitre latéral ou la lunette la face FA est la face Fw et est de préférence en contact adhésif avec la face F2 et/ou la face FB est la face F' qui est de préférence en contact adhésif avec la face F3.

Ce film tel que le PET peut couvrir la surface du vitrage feuilleté et le support de diodes (carte PCB, film plastique transparent tel que PET, polyimide, ou autre) être local.

Dans la présente description le terme vitrage latéral ou vitre latérale désigne la même chose.

La présente invention est à présent expliquée plus en détail en référence aux figures annexées dans lesquelles :

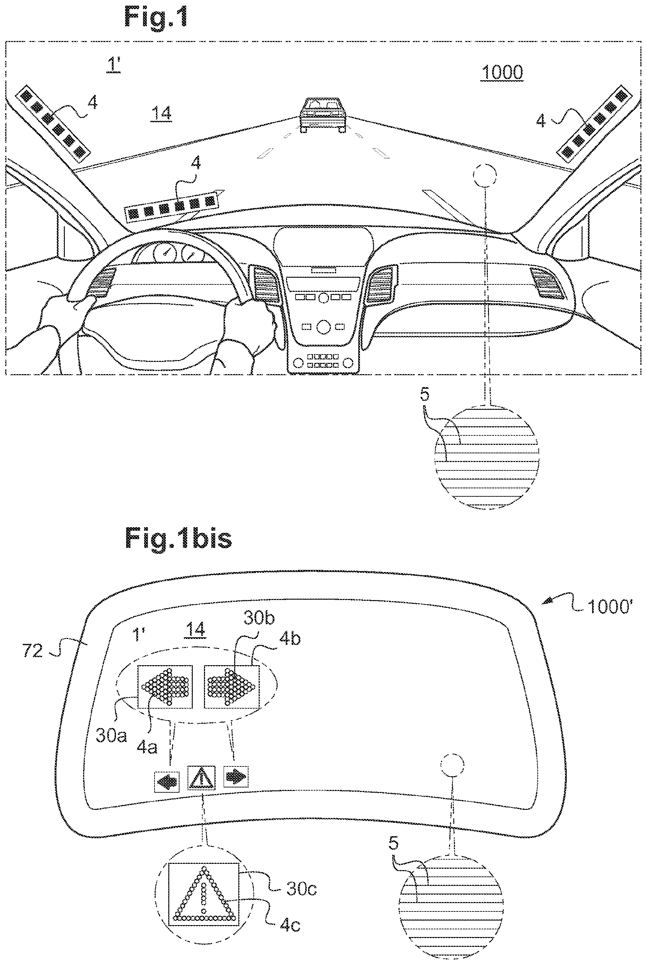

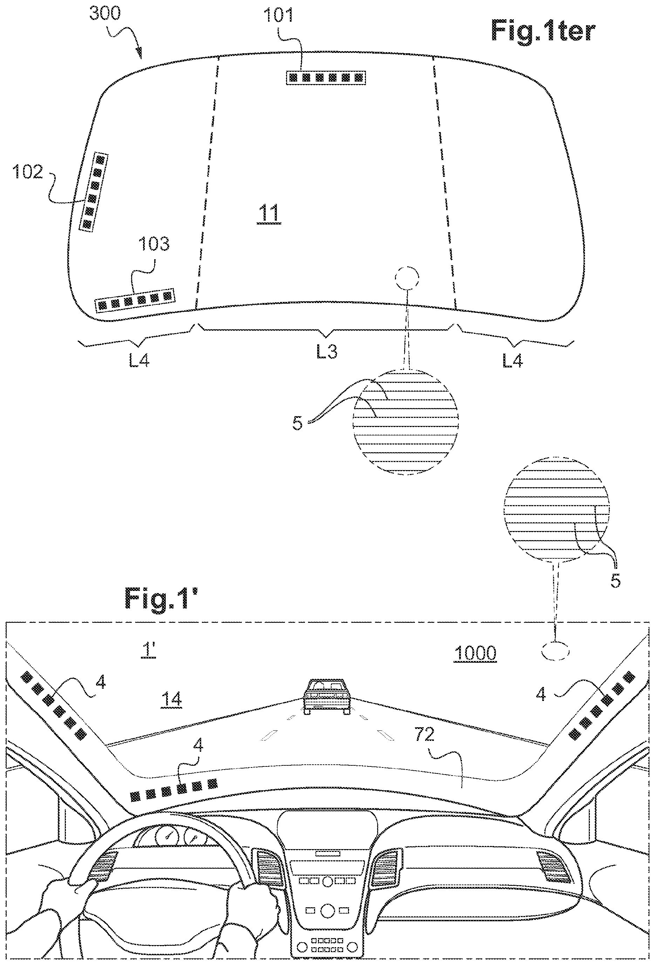

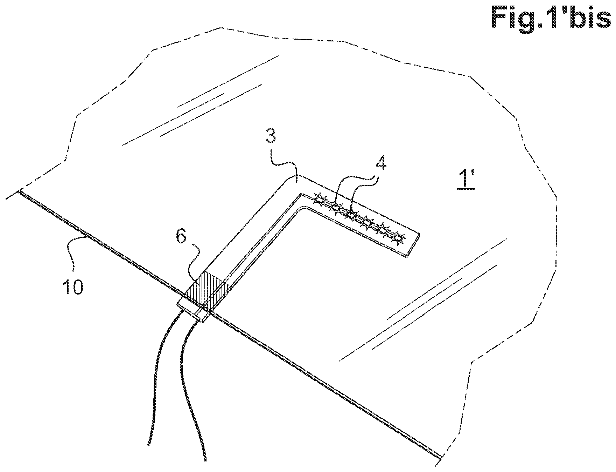

La figure 1 montre un pare-brise d'un véhicule automobile sur une route, pare-brise avec de la signalisation lumineuse selon l'invention.
La figure 1bis montre un autre pare-brise d'un véhicule automobile sur une route, pare-brise avec de la signalisation lumineuse selon l'invention.
La figure 1' montre un autre pare-brise d'un véhicule automobile sur une route, pare-brise avec de la signalisation lumineuse selon l'invention.
La figure 1ter est une vue schématique de face d'une lunette arrière à signalisation lumineuse dans un mode de réalisation de l'invention
La figure 2 est une vue schématique de coupe transversale d'un pare-brise à signalisation lumineuse dans un premier mode de réalisation de l'invention tout comme les figures 2a, 2b, 2', 2"a, 3a, 3b, 4a, 4b, 5a, 5b,6a, 6b.
La figure 7 montre une diode montée en surface d'un support à diodes.

La figure 1 montre (à partir de la vision de l'intérieur du véhicule) un pare-brise 1000 d'un véhicule automobile roulant sur une route à trois voies avec une voiture devant.

Le pare-brise est un vitrage feuilleté avec de la signalisation lumineuse selon l'invention ;
- à l'aide d'un premier ensemble de six diodes 4 sur une première carte de circuit imprimé dite carte PCB intégrée entre les deux vitrages du vitrage feuilleté, diodes en une rangée disposées dans le clair de vitre dans une zone de bord du pare-brise le long du bord longitudinal inférieur éventuellement dans ou au voisinage d'une zone périphérique de masquage (émail opaque..) du vitrage extérieur (non représenté) ou même dans une zone avec une alternance zone de masquage (couche opaque, comme un émail opaque) et zone transparente (en regard d'une diode) du vitrage extérieur et/ou intérieur,
- à l'aide d'un deuxième ensemble de six diodes 4 sur une deuxième carte de circuit imprimé dite carte PCB intégrée entre les deux vitrages du vitrage feuilleté, diodes en une rangée disposées dans le clair de vitre dans une zone de bord du pare-brise le long du bord latéral (gauche), notamment côté conducteur, éventuellement dans ou au voisinage d'une zone périphérique de masquage (émail opaque...) du vitrage extérieur ou même dans une zone avec une alternance zone de masquage (couche opaque, comme un émail opaque) et zone transparente (en regard d'une diode) du vitrage extérieur et/ou intérieur.
- à l'aide d'un troisième ensemble de six diodes 4 sur une troisième carte de circuit imprimé dite carte PCB intégrée entre les deux vitrages du vitrage feuilleté, diodes en une rangée disposées dans le clair de vitre dans une zone de bord du pare-brise le long du bord latéral droit notamment côté passager, éventuellement dans ou au voisinage d'une zone périphérique de masquage (émail opaque...) du vitrage extérieur ou même dans une zone avec une alternance zone de masquage ( couche opaque, comme un émail opaque) et zone transparente (en regard d'une diode) du vitrage extérieur et/ou intérieur

Ces diodes en particulier du premier ensemble peuvent émettre de la lumière rouge alertant le conducteur lorsque la voiture avant (ou tout autre moyen de locomotion ou encore un animal) est détectée trop proche. La lumière rouge peut être continue ou clignotante. La lumière choisie continue peut augmenter en intensité au fur et à mesure que la voiture de devant est proche ou à partir d'une distance prédéterminée dite distance à fort risque. La fréquence de lumière choisie clignotante peut augmenter au fur et à mesure que la voiture de devant est proche ou à partir d'une distance prédéterminée dite distance à fort risque.

Lorsque la voiture de devant est suffisamment éloignée (respect de la distance de sécurité), les diodes sont éteintes.

Ces diodes en particulier du deuxième ensemble peuvent émettre de la lumière rouge alertant le conducteur lorsqu'une voiture (ou tout autre moyen de locomotion ou encore un animal) est détectée trop proche sur le côté gauche de la voiture. La lumière rouge peut être continue ou clignotante. La lumière choisie continue peut augmenter en intensité au fur et à mesure que la voiture sur le côté est proche ou à partir d'une distance prédéterminée dite distance à fort risque. La fréquence de lumière choisie clignotante peut augmenter au fur et à mesure que la voiture sur le côté est proche ou à partir d'une distance prédéterminée dite distance à fort risque. Lorsque la voiture sur le côté est suffisamment éloignée (respect de la distance de sécurité), les diodes sont éteintes.

Ces diodes en particulier du troisième ensemble peuvent émettre de la lumière rouge alertant le conducteur lorsqu'une voiture (ou tout autre moyen de locomotion ou encore un animal) est détectée trop proche sur le côté droit de la voiture. La lumière rouge peut être continue ou clignotante. La lumière choisie continue peut augmenter en intensité au fur et à mesure que la voiture sur le côté est proche ou à partir d'une distance prédéterminée dite distance à fort risque. La fréquence de lumière choisie clignotante peut augmenter au fur et à mesure que la voiture sur le côté est proche ou à partir d'une distance prédéterminée dite distance à fort risque. Lorsque la voiture sur le côté est suffisamment éloignée (respect de la distance de sécurité), les diodes sont éteintes.

Le système anti collision fonctionne sur n'importe quelle route : autoroute, en ville. Il peut servir aussi pour alerter de la présence trop rapprochée d'un objet ou d'un piéton.

La lumière de signalisation peut aussi passer d'une couleur (par exemple orange ou ambre) lorsque le véhicule à une distance à risque à une autre couleur par exemple rouge lorsque le véhicule à une distance plus courte encore plus dangereuse.

Dans ces cas, on prévoit autant de diodes que nécessaires par exemple une rangée avec une alternance de diodes rouges et de diodes orange ou une rangée par couleur. On peut aussi avoir au moins trois niveaux de signalisation (trois couleurs).

Le véhicule intègre au moins un capteur (de préférence un par ensemble de diodes) pour détecter ces situations dangereuses (non-respect de la distance de sécurité ou autres) et au moins une unité de commande pour piloter les diodes.

Les diodes ne sont pas nécessairement en rangée, notamment parallèle au bord du vitrage.

La ou les cartes PCB avec des diodes est de préférence dans le quadrant inférieur côté conducteur. Etant dans le clair de vitre on préfère une carte PCB transparente.

Le pare-brise comporte un ensemble de fils métalliques 5, quasi invisibles, par exemple de 50µm qui sont mis en place sur une face côté face F3 de l'intercalaire de feuilletage (sur toute la surface), en forme des lignes droites ou non.

La figure 1bis montre un autre pare-brise d'un véhicule automobile, pare-brise 1000' avec de la signalisation lumineuse selon l'invention. Il diffère de celui de la figure 1 par le type de signalisation et par l'emplacement des deuxième et troisième cartes PCB.

Le premier ensemble de diodes 4c, sur un support 30C, forme un triangle avec si possible un point d'exclamation central. Il forme donc un signal de danger

Les deuxième et troisième ensemble de diodes 4a et 4b, sur leur support 30a et 30b, forme des flèches indiquant que le clignotant est enclenché.

Le pare-brise comporte un ensemble de fils métalliques 5, quasi invisibles, par exemple de 50µm qui sont mis en place sur une face côté face F3 de l'intercalaire de feuilletage (sur toute la surface), en forme des lignes droites ou non.

La figure 1' montre un autre pare-brise d'un véhicule automobile sur une route, pare-brise avec de la signalisation lumineuse selon l'invention. Il diffère de celui de la figure 1 par l'emplacement plus en périphérie des trois cartes PCB, qui peuvent être opaques (support opaque et/ou pistes (fils etc) conductrices opaques). La face F2 comporte un cadre plein de masquage en émail noir de préférence et la face F4 (ou F3) un cadre de masquage en émail noir de préférence, avec des ouvertures au droit des diodes.

Le pare-brise comporte un ensemble de fils métalliques 5, quasi invisibles, par exemple de 50µm qui sont mis en place sur une face côté face F3 de l'intercalaire de feuilletage (sur toute la surface), en forme des lignes droites ou non.

La figure 1ter est une vue schématique de face (côté face F1 ou face 12) d'une lunette arrière à signalisation lumineuse externe 300 dans un mode de réalisation de l'invention.

Dans la zone centrale L3, on forme un troisième feu stop 101 avec par exemple six diodes rouges sur la carte PCB le long du bord longitudinal supérieur.

Dans chaque zone latérale L4, on forme un clignotant 102 avec par exemple six diodes émettant dans le jaune sur la carte PCB le long du bord latéral en jeu, ou encore un feu de signalisation 103 avec par exemple six diodes sur la carte PCB le long du bord longitudinal inférieur en jeu.

Le pare-brise comporte un ensemble de fils métalliques 5, quasi invisibles, par exemple de 50µm qui sont mis en place sur une face côté face F2 de l'intercalaire de feuilletage (sur toute la surface), en forme des lignes droites ou non.

Alternativement, on forme un répétiteur de clignotant sur un vitrage latéral de la même façon.

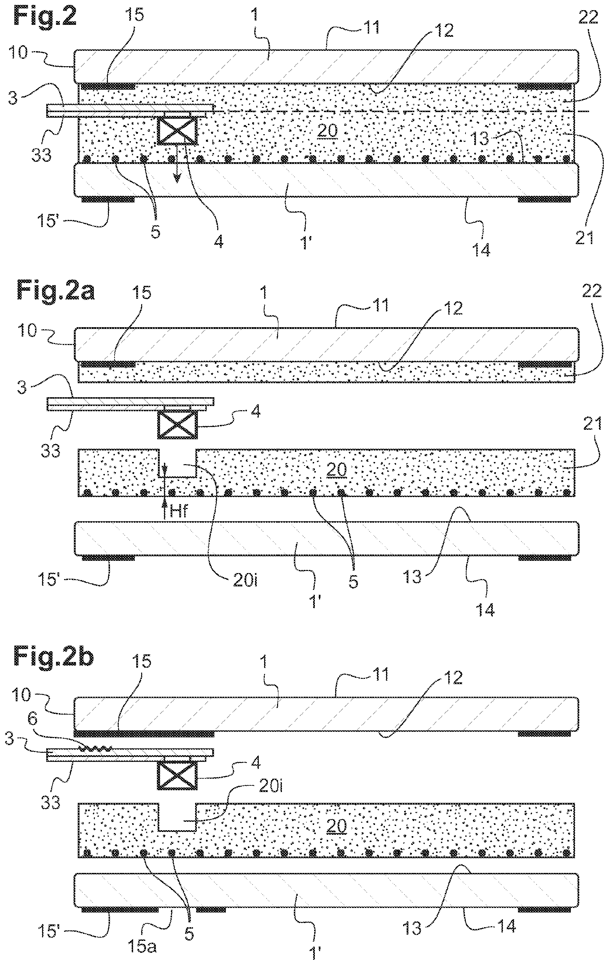

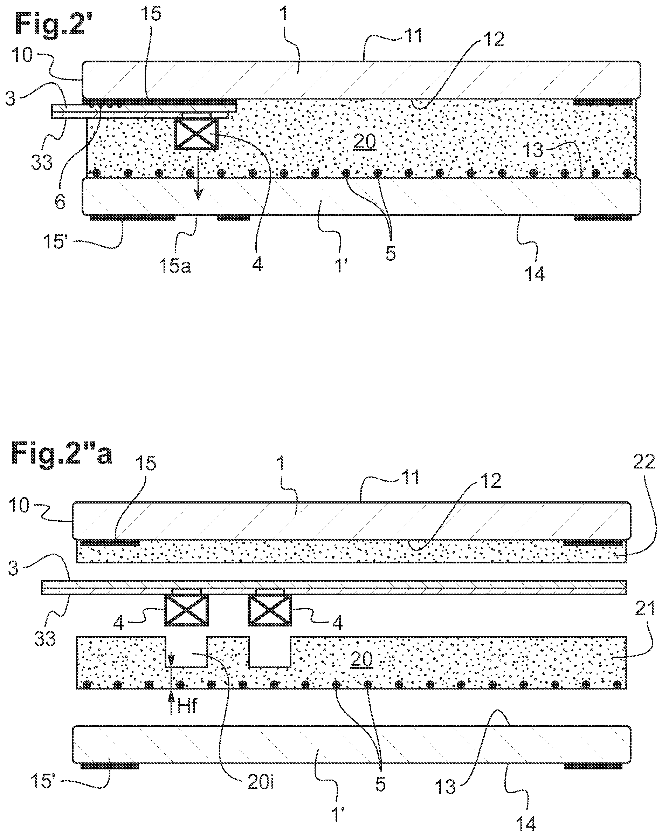

La figure 2 est une vue schématique de coupe transversale d'un pare-brise à signalisation lumineuse dans un premier mode de réalisation de l'invention, comprenant un vitrage feuilleté bombé, comportant :
- un premier vitrage 1, par exemple en verre TSA et de 2,1mm d'épaisseur, formant vitrage extérieur, de préférence teinté, avec des première et deuxième faces principales 11, 12 respectivement dites face F1 -- et face F2, et une tranche 10
- un intercalaire de feuilletage 20 en matière polymérique, ici en PVB, de préférence clair, d'épaisseur submillimétrique de préférence, par exemple un PVB (RC41 de Solutia ou d'Eastman) d'épaisseur 0,76mm environ ou en variante si nécessaire un PVB acoustique (tricouche ou quadricouche) par exemple d'épaisseur 0,81mm environ, dont la face FB côté face F3 est porteuse d'un ensemble de fils métalliques 5 couvrant la surface (sensiblement) notamment en regard de la ou des diodes
- un deuxième vitrage 1', formant vitrage intérieur par exemple en verre TSA (ou clair ou extraclair) et de 2,1mm d'épaisseur ou même de 1,6mm ou même moins, avec des troisième et quatrième faces principales 13, 14 respectivement dites face F3 et face F4, la face F4 éventuellement revêtue d'une couche fonctionnelle (basse émissivité etc),
   la face F2 et la face F3 étant les faces internes 11, 11' du vitrage feuilleté
- un ensemble de diodes électroluminescentes inorganiques 4, qui sont des composants montés en surface (CMS ou SMD en anglais), par exemple émettant dans le rouge sur une carte à circuit imprimé dite carte PCB 3, l'ensemble carte PCB+diodes étant d'épaisseur totale et2≤e1 et mieux avec e1-et2 d'au plus 0,5mm et de préférence de 0,1mm à 0,2mm, les diodes étant d'épaisseur e2 et la carte PCB 3 d'épaisseur e'2, avec une face dite avant 30 en regard de la face F3 et une face arrière 30' contre la face F2 ou face 11, chaque diode ayant une face émettrice émettant en direction du vitrage intérieur 1', et chaque diode ayant une tranche,

Pour chacune des diodes, l'intercalaire de feuilletage a une région 21 comprend une ouverture borgne entourant la tranche de la diode et en contact de la tranche et même le fond de paroi formant l'ouverture pouvant être en contact avec la diode 4.

L'intercalaire de feuilletage 20 est présent entre la face F3 et la face avant de la carte PCB 3 sur toute la face avant du PCB hors diodes, dans le vitrage feuilleté. L'intercalaire de feuilletage 22 est également présent entre la face F2 et la face arrière 30'.

Les diodes (avec une seule puce semiconductrice ici) sont de forme carrée de largeur de l'ordre de 5mm ou moins.

On choisit une carte PCB 3 la plus fine possible, flexible et même de préférence la plus discrète possible (largeur minimale ou même transparence) par exemple comportant un film transparent comme un PET, PEN ou un polyimide et même pour le circuit imprimé des pistes de connexion transparentes (plutôt qu'en cuivre sauf à les faire suffisamment fines). La carte PCB dépasse de la tranche 10.

Le pare-brise comporte un cadre en émail noir 15 en face F2 et un cadre en émail noir 15' en face F4.

La figure 2a montre une vue en éclaté de ce vitrage montrant l'utilisation de deux feuillets PVB :
- le feuillet par exemple acoustique avec les trous borgnes 20i, avec une épaisseur restante Hf
- le feuillet dit arrière 22 côté face arrière 30'.

Dans une variante de la figure 2 montrée en figure 2b en vue éclatée ou en figure 2 en vue rassemblée :
- on remplace le feuillet dit arrière par un adhésif étanche 6 sur la face arrière 30' de le support de diodes flexible 3
- on fait une épargne 15a dans la couche émail 15' en face F4 pour laisser passer la lumière de la diode 4 qui est plus en périphérie ici
- éventuellement le support de diodes flexible avec les pistes 33 est opaque (car masqué par les couches 15, 15').

Dans une variante de la figure 2 montrée en figure 2"a en vue éclatée :
- le support de diodes 3, flexible et transparent par exemple PET, avec une couche conductrice (transparente) 33 n'est plus local mais couvre les faces principales, par exemple pour une fonction de contrôle solaire
- deux ouvertures borgnes disjointes pour loger deux diodes 4 sont montrées ici
- les deux feuillets de PVB 21, 22 sont donc ici disjoints.

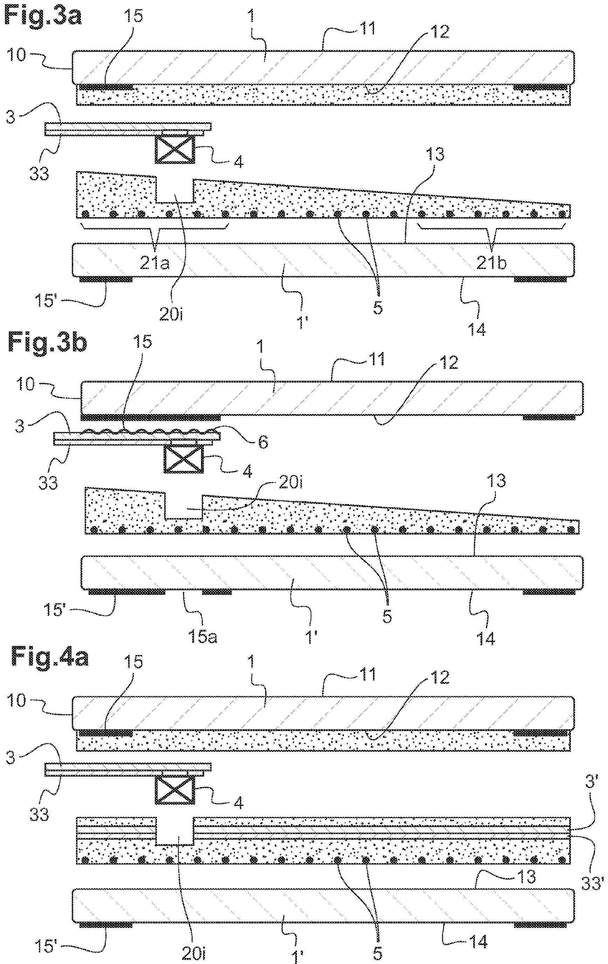

Dans une variante de la figure 2a montrée en figure 3a en vue éclatée :
- le feuillet avec les ouvertures borgnes 20i est à coin, les diodes 4 sont notamment dans la partie dite haute 21a du PVB (et donc la partie haute du pare-brise) plus épaisse que la partie basse 21b du PVB.

Dans une variante de la figure 3a montrée en figure 3b en vue éclatée :
- le feuillet arrière est supprimé et remplacé par un adhésif étanche 6 sur la face arrière 30' du support de diodes 3 flexible par exemple avec des pistes 33 en cuivre
- on fait une épargne 15a dans la couche émail 15' en face F4 pour laisser passer la lumière de la diode 4 plus en périphérie ici.

Dans une variante de la figure 2 montrée en figure 4a en vue éclatée le feuillet avec les ouvertures borgnes est un muticouches (préassemblé) par exemple PVB/film plastique PET à couche fonctionnelle comme une couche électroconductrice (contrôle solaire etc, notamment empilement à l'argent )/ PVB avec les fils électroconducteurs. L'ouverture borgne 20i peut, comme montré ici percer, le PET 3' et la couche électroconductrice 33' (coté face F3 ou même coté face F2) ou peut dans une variante laisse intègre la couche électroconductrice 33' et même le PET 3'.

Dans une variante de la figure 4a, les fils électroconducteurs sont entre le premier PVB et le PET 3'. L'ouverture borgne s'arrête donc avant les fils , le PET et la couche 33'.

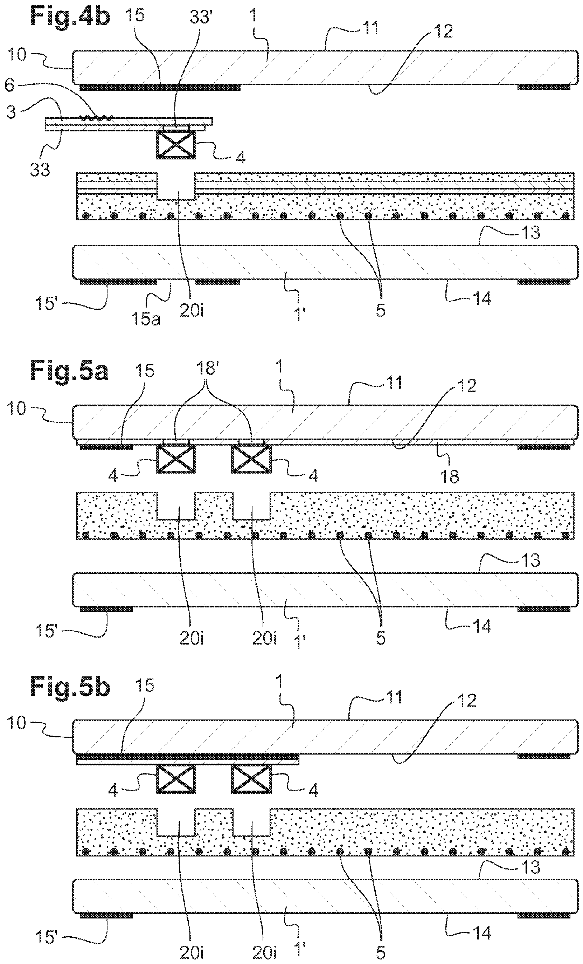

Dans une variante de la figure 4a montrée en figure 4b en vue éclatée :
- le feuillet arrière est supprimé et remplacé par un adhésif étanche 6 sur la face arrière 30'
- on fait une épargne 15a dans la couche émail 15' en face F4 pour laisser passer la lumière de la diode 4 plus en périphérie ici
L'ouverture borgne 20i peut comme montré ici percer le PET et la couche électroconductrice ou peut dans une variante laisse intègre la couche électroconductrice et même le PET.

Dans une variante de la figure 2, 2b, 2',2"a, 3a, 3b 4a ou 4b, on ajoute un feuillet PVB entre la face Fw et la face F3.

Dans une variante de la figure 2 montrée en figure 5a en vue éclatée :
- le feuillet arrière et le support de diodes sont supprimés
- les diodes 4 sont montées en surface sur une couche 18 électroconductrice couvrant la face F2 (éventuellement de contrôle solaire aussi), par exemple avec soudure ou colle conductrice.

Dans une variante de la figure 5a montrée en figure 5b en vue éclatée la couche 18 électroconductrice (éventuellement de contrôle solaire aussi) par exemple opaque comme un émail à l'argent est sur l'émail de masquage 15.

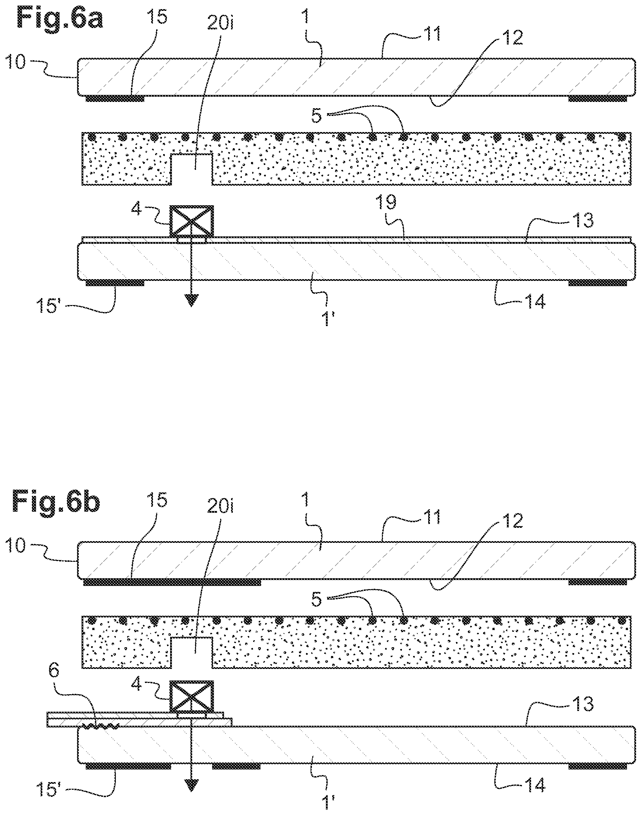

Dans une variante de la figure 2 montrée en figure 6a en vue éclatée :
- les diodes 4 sont montées en surface sur une couche 18 électroconductrice couvrant la face F3 (éventuellement de contrôle solaire aussi) et les diodes 4 sont à montage inverse
- les fils électroconducteurs 5 sont sur la face FA coté F2 de l'intercalaire PVB donc l'ouverture borgne est côté F3.

Dans une variante de la figure 6a montrée en figure 6b en vue éclatée :
- les diodes restent à montage inverse les diodes 4 mais sur un support PCB 2 sur la face F3
- on fait une épargne 15a dans la couche émail 15' en face F4 pour laisser passer la lumière de la diode 4 plus en périphérie ici.

Une diode peut être de type « chip on board » ou encore tout préférentiellement un composant monté en surface (SMD en anglais) comportant alors une enveloppe périphérique (souvent dénommée « packaging »).

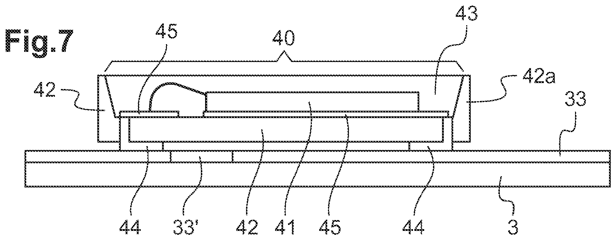

Dans un mode de réalisation préféré montré en figure 7 chaque diode est un composant électronique incluant au moins une puce semi-conductrice 41, et est équipée d'une enveloppe périphérique 42 (souvent dénommée « packaging »), polymérique ou céramique, encapsulant la tranche 42a du composant électronique (et définissant la tranche de la diode), entourant la puce semi-conductrice.

L'enveloppe peut correspondre à l'épaisseur maximale (hauteur) e2 de la diode. L'enveloppe est par exemple en époxy. Une enveloppe polymérique peut éventuellement se tasser (l'épaisseur finale après feuilletage peut être inférieure à l'épaisseur initiale) lors du feuilletage. L'enveloppe (polymérique) peut être opaque.

L'enveloppe (monolithique ou en deux pièces) peut comprendre une partie formant embase 42 porteuse de la puce et une partie formant réflecteur évasée en s'éloignant de l'embase plus haute que la puce, et contenant une résine de protection 43 et/ une matière à fonction de conversion de couleur. On peut définir la surface avant 40 comme la surface de cette matière couvrant la puce en retrait ou au niveau de la surface « avant » du réflecteur.

La diode peut comprendre une résine de protection ou une matière à fonction de conversion de couleur même juste sur la puce semi-conductrice. La puce-semiconductrice peut être noyée dans une matière (résine, etc).

Les contacts 44 d'anode et de cathode sur sur une couche 33 isolé 33'. Les contacts sont prolongés par des « via hole » dans l'embase jusqu'à des zones de couches 44, l'une relié par un fil à la cathode.

## Revendications

1. Vitrage de signalisation lumineuse de véhicule formant pare-brise de véhicule (1000, 1000') comprenant :
- un vitrage feuilleté comportant :
- un premier vitrage (1), en verre minéral, formant vitrage extérieur, avec des première et deuxième faces principales (11, 12) respectivement dites face F1 et face F2
- un deuxième vitrage (1'), en verre minéral, formant vitrage intérieur, avec des troisième et quatrième faces principales (13, 14) respectivement dites face F3 et face F4
- entre la face F2 et la face F3 qui sont les faces internes du vitrage feuilleté
- un intercalaire de feuilletage (2) en matière polymérique thermoplastique ayant une face principale FA côté face F2 et une face principale FB côté face F3 et notamment une épaisseur e1
- au moins une diode électroluminescente inorganique et de préférence un ensemble de diodes électroluminescentes inorganiques (4) chaque diode étant d'épaisseur e2 submillimétrique et de préférence d'au moins 0,2mm, chaque diode étant apte à émettre en direction de la face F3 une lumière de signalisation, et chaque diode ayant une tranche, l'intercalaire de feuilletage ayant une ouverture (20)
**caractérisé en ce que** le vitrage comporte en outre un ensemble de fils électroconducteurs ancrés sur une face dite Fw de l'intercalaire de feuilletage qui est soit la face FA soit la face FB
et **en ce que**
pour chaque diode, l'intercalaire de feuilletage comprend en face opposée à la face Fw, dite face F', une ouverture qui est borgne (20), logeant la diode,
et/ou pour un groupe des diodes, l'intercalaire de feuilletage comprend en face opposée à la face Fw, dite face F', une ouverture qui est borgne et commune (20) logeant ledit groupe de diodes
l'épaisseur restante Hf de l'intercalaire de feuilletage, entre Fw et le fond de l'ouverture borgne, étant de préférence d'au moins 0,1mm
et de préférence la diode étant en contact avec le fond de l'ouverture borgne ou espacée du fond d'au plus 0,2mm ou d'au plus 0,1mm.

2. Vitrage de signalisation lumineuse de véhicule choisi parmi une lunette arrière (2000) et une vitre latérale, comprenant :
- un vitrage feuilleté comportant :
- un premier vitrage, formant vitrage extérieur, avec des première et deuxième faces principales (11) respectivement dites face F1 et face F2,
- un intercalaire de feuilletage en matière polymérique thermoplastique,
- un deuxième vitrage 1', formant vitrage intérieur, avec des troisième et quatrième faces principales respectivement dites face F3 et face F4
- entre la face F2 et la face F3 qui sont les faces internes du vitrage feuilleté, un intercalaire de feuilletage (2) en matière polymérique thermoplastique ayant une face principale FA côté face F2 et une face principale FB côté face F3, et notamment une épaisseur e1
- au moins une diode électroluminescente inorganique et de préférence un ensemble de diodes électroluminescentes inorganiques (4), chaque diode étant d'épaisseur e2 submillimétrique et de préférence d'au moins 0, 2mm,
- chaque diode étant apte à émettre en direction de la face F2 une lumière de signalisation, l'intercalaire de feuilletage ayant une ouverture (20) **caractérisé en ce que**
le vitrage comporte en outre un ensemble de fils électroconducteurs ancrés sur une face dite Fw de l'intercalaire de feuilletage qui est soit la face FA soit la face FB et **en ce que**
pour chaque diode, l'intercalaire de feuilletage comprend en face opposée à la face Fw, dite face F', une ouverture borgne (20) logeant la diode,
et/ou pour un groupe des diodes, l'intercalaire de feuilletage comprend en face opposée à la face Fw, dite face F', une ouverture qui est borgne et commune (20) logeant ledit groupe de diodes,
l'épaisseur restante Hf de l'intercalaire de feuilletage, entre Fw et le fond de l'ouverture borgne, étant de préférence d'au moins 0,1mm,
et de préférence la surface avant de la diode étant en contact avec le fond de l'ouverture borgne ou espacé de celui-ci d'au plus 0,2mm ou d'au plus 0,1mm.

3. Vitrage de signalisation lumineuse de véhicule selon l'une des revendications précédentes **caractérisé en ce que** les parois d'une ouverture borgne de l'intercalaire de feuilletage (2) sont espacées d'au plus 0,5mm mieux d'au plus 0,1mm de la tranche de la diode (4) et sont même en contact avec la tranche de la diode et/ou les parois d'une ouverture borgne commune de l'intercalaire de feuilletage (2) sont espacées d'au plus 0,5mm mieux d'au plus 0,1mm du groupe de diodes (4) et sont même en contact avec la tranche des diodes.

4. Vitrage de signalisation lumineuse de véhicule selon l'une des revendications précédentes **caractérisé en ce que** l'intercalaire de feuilletage est en poly(vinyl butyral) (PVB), éventuellement acoustique et/ou en coin, notamment pour un pare-brise, ou encore un élément composite PVB/film plastique fonctionnel ou PVB/film plastique fonctionnel/PVB, le film plastique fonctionnel, de préférence un PET, étant porteur d'une couche fonctionnelle notamment électroconductrice, notamment le film plastique est entre l'ouverture borgne et la face Fw ou la face Fw est entre le trou borgne et le film plastique.

5. Vitrage de signalisation lumineuse de véhicule selon l'une des revendications précédentes **caractérisé en ce que** pour chaque diode, l'intercalaire de feuilletage comprend en face opposée à la face Fw, dite face F', ladite ouverture qui est borgne (20), logeant la diode, et l'ouverture borgne est de largeur d'au plus 20mm et même d'au plus 15mm.

6. Vitrage de signalisation lumineuse de véhicule selon l'une des revendications précédentes **caractérisé en ce que** l'intercalaire de feuilletage (2) est en PVB avec une épaisseur allant de 0,5 à 0,9mm, la ou les diodes (4) sont des composants montés en surface d'un support de diodes, de préférence sur une face avant d'un support de diodes flexible, comme une carte PCB, d'épaisseur e'2 de préférence d'au plus 0,15mm, de préférence la carte PCB s'étend jusqu'à la tranche du vitrage feuilleté et dépasse de la tranche du vitrage.

7. Vitrage de signalisation lumineuse de véhicule selon l'une quelconque des revendications précédentes **caractérisé en ce que** la ou les diodes (4) sont des composants montés en surface d'un support de diodes, de préférence sur une face avant d'un support de diodes flexible dont la face arrière est collé ou plaqué contre la face F2 pour le pare-brise ou contre la face F3 pour la lunette arrière ou le vitrage latéral, collage par un adhésif (6) d'épaisseur e3≤0,1mm, mieux e3≤0,05mm, de préférence le support de diodes s'étend jusqu'à la tranche du vitrage feuilleté et dépasse de la tranche du vitrage.

8. Vitrage de signalisation lumineuse de véhicule selon l'une des revendications 1 à 7 **caractérisé en ce que** la ou les diodes (4) sont des composants montés en surface d'un support de diodes, de préférence sur une face avant d'un support de diodes flexible, un intercalaire de feuilletage est également entre la face arrière du support de diodes et la face F2 du pare-brise ou **en ce qu'**un intercalaire de feuilletage est également entre la face arrière du support de diodes et la face F3 de la lunette arrière ou de la vitre latérale.

9. Vitrage de signalisation lumineuse de véhicule selon l'une quelconque des revendications précédentes **caractérisé en ce que** la ou les diodes (4) sont des composants montés en surface d'un support de diodes, de préférence sur une face avant d'un support de diodes flexible, le support de diodes comporte un film en matière plastique, de préférence en poly(éthylène téréphtalate) ou en polyimide, pourvue de pistes conductrices de préférence transparentes, de préférence le support de diodes s'étend jusqu'à la tranche du vitrage feuilleté et dépasse de la tranche du vitrage.

10. Vitrage de signalisation lumineuse de véhicule selon l'une quelconque des revendications précédentes **caractérisé en ce que** la ou les diodes (4) sont des composants montés en surface sur une face d'un support de diodes flexible, le support de diodes flexible est disposé dans une région du pare-brise dans laquelle le vitrage extérieur est opaque par une couche opaque, notamment en émail, de préférence en face F2 et/ou dans laquelle le vitrage intérieur est opaque par une couche opaque, notamment en émail, de préférence en face F4 et comportant alors au moins des ouvertures au droit des diodes ou **en ce que** le support de diodes flexible est disposé dans une région de la lunette arrière ou de la vitre latérale dans laquelle le vitrage intérieur est opaque par une couche opaque, notamment en émail, de préférence en face F4 et/ou dans laquelle le vitrage extérieur est opaque par une couche opaque, notamment en émail, de préférence en face F2 et comportant alors au moins des ouvertures au droit des diodes.

11. Vitrage de signalisation lumineuse de véhicule selon l'une des revendications précédentes **caractérisé en ce que** la ou les diodes (4) sont des composants montés en surface sur une face dite avant d'un support de diodes flexible, le support de diodes flexible s'étend au moins jusqu'à la tranche (10) du premier vitrage (1) et de préférence dépasse de la tranche, et entre la face arrière (30') du support de diodes flexible et la face F2 du pare-brise ou la face F3 de la lunette arrière ou de la vitre latérale, est logé un adhésif (6) étanche à l'eau liquide d'épaisseur d'au plus 0,1mm et mieux d'au plus 0,05mm, notamment un adhésif double face.

12. Vitrage de signalisation lumineuse de véhicule selon l'une des revendications précédentes **caractérisé en ce que** la ou l'une des diodes est un indicateur lumineux d'un interrupteur tactile de préférence capacitif entre faces F2 et F3 ou sur la face F4.

13. Véhicule comportant au moins un vitrage de signalisation lumineuse selon l'une quelconque des revendications précédentes **caractérisé en ce que** le vitrage de signalisation lumineuse formant pare-brise est un vitrage dont la lumière de signalisation est un moyen anti-collision ou le vitrage de signalisation lumineuse formant lunette arrière est un vitrage incluant un feu-stop, en particulier un troisième feu stop, ou le vitrage de signalisation lumineuse formant vitrage latérale est un vitrage incluant un feu de détresse ou un feu de repérage du véhicule ou un répétiteur de clignotant.

14. Procédé de fabrication du vitrage de signalisation lumineuse selon l'une des revendications de vitrage précédentes **caractérisé en ce qu'**il comporte les étapes suivantes:
- découpe automatique de l'intercalaire de feuilletage porteuse desdits fils sous forme d'une première feuille thermoplastique d'épaisseur d'au plus 0,9mm pour former la ou les ouvertures borgnes locales,
- assemblage du vitrage feuilleté, notamment avec des ouvertures borgnes plus larges que la taille des diodes de préférence plus larges d'au plus 0,5mm ou même d'au plus 0,1mm.

15. Procédé de fabrication du vitrage de signalisation lumineuse selon la revendication précédente **caractérisé en ce que** la ou les diodes (4) sont des composants montés en surface d'un support de diodes, de préférence sur une face avant d'un support de diodes flexible, avec la face avant contre la première feuille thermoplastique.

16. Procédé de fabrication du vitrage de signalisation lumineuse selon la revendication 14 ou 15 **caractérisé en ce que** la première feuille est en PVB, les fils électroconducteurs sont en contact avec un autre feuillet de préférence PVB ou sont en contact avec la face F3 pour le pare-brise de préférence ou F2 pour la lunette ou le vitrage latéral de préférence.

17. Procédé de fabrication du vitrage de signalisation lumineuse selon la revendication 14 ou 15 **caractérisé en ce que** la première feuille est en PVB éventuellement acoustique et/ou en coin ou multifeuillet préassemblé PVB/ film plastiqus tel que PET fonctionnel ou PVB/ film plastique tel que PET dit fonctionnel comportant de préférence une couche électroconductrice /PVB, les fils étant éventuellement sur une surface libre du préassemblé, notamment le film plastique est entre l'ouverture borgne et la face Fw ou la face Fw est entre le trou borgne et le film plastique.

18. Procédé de fabrication du vitrage de signalisation lumineuse selon la revendication 17 **caractérisé en ce que** la première feuille est un multifeuillet préassemblé PVB/film plastique comportant une couche électroconductrice /PVB, on réalise la ou les ouvertures borgnes dans le PVB sans atteindre la couche électroconductrice et de préférence sans atteindre le film plastique, les fils étant éventuellement sur une surface libre du préassemblé, notamment le film plastique est entre l'ouverture borgne et la face Fw ou la face Fw est entre le trou borgne et le film plastique.

19. Procédé de fabrication du vitrage de signalisation lumineuse selon l'une des revendication 14 à 18 **caractérisé en ce que** pour le pare brise, la face FA est la face F' et est de préférence en contact adhésif avec la face F2 et/ou la face Fw est la face FB qui est de préférence en contact adhésif avec la face F3 ou **en ce que** pour le vitre latéral ou la lunette la face FA est la face Fw et est de préférence en contact adhésif avec la face F2 et/ou la face FB est la face F' qui est de préférence en contact adhésif avec la face F3.

20. Procédé de fabrication du vitrage de signalisation lumineuse selon l'une des revendication 14 à 18 **caractérisé en ce que** la ou les diodes (4) sont des composants montés en surface d'un support de diodes notamment flexible et d'épaisseur e'2 d'au plus 0,2mm, montées sur une face avant du support de diodes flexible qui est contre la face F' et de préférence le support de diodes dépasse de la tranche du vitrage feuilleté.

## Patentansprüche

1. Fahrzeugverglasung mit Leuchtanzeige, die eine Fahrzeugwindschutzscheibe (1000, 1000') bildet, umfassend:
- eine Verbundverglasung, umfassend:
- eine erste Verglasung (1) aus Mineralglas, die eine Außenverglasung bildet, mit ersten und zweiten Hauptflächen (11, 12), die jeweils als Fläche F1 und Fläche F2 bezeichnet werden
- eine zweite Verglasung (1') aus Mineralglas, die eine Innenverglasung bildet, mit dritten und vierten Hauptflächen (13, 14), die jeweils als Fläche F3 und Fläche F4 bezeichnet werden
- zwischen der Fläche F2 und der Fläche F3, welche die Innenflächen der Verbundverglasung bilden
- eine Laminierungszwischenschicht (2) aus einem thermoplastischen Polymermaterial, die eine zur Fläche F2 ausgerichtete Hauptfläche FA und eine zur Fläche F3 ausgerichtete Hauptfläche FB aufweist, und insbesondere mit einer Dicke e1
mindestens eine anorganische Leuchtdiode und vorzugsweise einen Satz anorganischer Leuchtdioden (4), wobei jede Diode eine submillimetrische Dicke e2 aufweist, die vorzugsweise mindestens 0,2 mm beträgt, wobei jede Diode ein Signallicht in Richtung der Fläche F3 emittieren kann und jede Diode einen Rand aufweist, wobei die Laminierungszwischenschicht eine Öffnung (20) aufweist,
**dadurch gekennzeichnet, dass** die Verglasung ferner einen Satz elektrisch leitender Drähte umfasst, die auf einer Fläche Fw der Laminierungszwischenschicht verankert sind, bei der es sich entweder um die Fläche FA oder die Fläche FB handelt
und **dadurch, dass**
die Laminierungszwischenschicht für jede Diode ein Sackloch (20) auf einer der Fläche Fw gegenüberliegenden Fläche F' umfasst, das die Diode beherbergt,
und/oder die Laminierungszwischenschicht für eine Gruppe von Dioden ein gemeinsames Sackloch (20) auf einer der Fläche Fw gegenüberliegenden Fläche F' umfasst, das die Gruppe von Dioden beherbergt,
wobei die verbleibende Dicke Hf der Laminierungszwischenschicht zwischen Fw und dem Boden des Sacklochs vorzugsweise mindestens 0,1 mm beträgt,
und wobei die Diode vorzugsweise mit dem Boden des Sacklochs in Kontakt ist oder höchstens 0,2 mm oder höchstens 0,1 mm vom Boden beabstandet ist.

2. Fahrzeugverglasung mit Leuchtanzeige, die aus einer Heckscheibe (2000) und einer Seitenscheibe ausgewählt ist, umfassend:
- eine Verbundverglasung, umfassend:
- eine erste Verglasung, die eine Außenverglasung bildet, mit ersten und zweiten Hauptflächen (11), die jeweils als Fläche F1 und Fläche F2 bezeichnet werden,
- eine Laminierungszwischenschicht aus thermoplastischem Polymermaterial,
- eine zweite Verglasung 1', die eine Innenverglasung bildet, mit dritten und vierten Hauptflächen, die jeweils als Fläche F3 und Fläche F4 bezeichnet werden
- zwischen der Fläche F2 und der Fläche F3, welche die Innenflächen der Verbundverglasung bilden, eine Laminierungszwischenschicht (2) aus einem thermoplastischen Polymermaterial, die eine zur Fläche F2 ausgerichtete Hauptfläche FA und eine zur Fläche F3 ausgerichtete Hauptfläche FB aufweist, und insbesondere mit einer Dicke e1
- mindestens eine anorganische Leuchtdiode und vorzugsweise einen Satz anorganischer Leuchtdioden (4), wobei jede Diode eine submillimetrische Dicke e2 und vorzugsweise von mindestens 0,2 mm aufweist,
- wobei jede Diode ein Signallicht in Richtung der Fläche F2 emittieren kann, wobei die Laminierungszwischenschicht eine Öffnung (20) aufweist,
**dadurch gekennzeichnet, dass**
die Verglasung ferner einen Satz elektrisch leitender Drähte umfasst, die auf einer Fläche Fw der Laminierungszwischenschicht verankert sind, bei der es sich entweder um die Fläche FA oder die Fläche FB handelt
und **dadurch, dass**
die Laminierungszwischenschicht für jede Diode ein Sackloch (20) auf einer der Fläche Fw gegenüberliegenden Fläche F' umfasst, das die Diode beherbergt,
und/oder die Laminierungszwischenschicht für eine Gruppe von Dioden ein gemeinsames Sackloch (20) auf einer der Fläche Fw gegenüberliegenden Fläche F' umfasst, das die Gruppe von Dioden beherbergt,
wobei die verbleibende Dicke Hf der Laminierungszwischenschicht zwischen Fw und dem Boden des Sacklochs vorzugsweise mindestens 0,1 mm beträgt,
und wobei die Vorderseite der Diode vorzugsweise mit dem Boden des Sacklochs in Kontakt ist oder höchstens 0,2 mm oder höchstens 0,1 mm von diesem beabstandet ist.

3. Fahrzeugverglasung mit Leuchtanzeige nach einem der vorstehenden Ansprüche, **dadurch gekennzeichnet, dass** die Wände eines Sacklochs der Laminierungszwischenschicht (2) höchstens 0,5 mm, vorzugsweise höchstens 0,1 mm vom Rand der Diode (4) beabstandet und sogar mit dem Rand der Diode in Kontakt sind, und/oder die Wände eines gemeinsamen Sacklochs der Laminierungszwischenschicht (2) höchstens 0,5 mm, vorzugsweise höchstens 0,1 mm von der Gruppe von Dioden (4) beabstandet und sogar mit dem Rand der Dioden in Kontakt sind.

4. Fahrzeugverglasung mit Leuchtanzeige nach einem der vorstehenden Ansprüche, **dadurch gekennzeichnet, dass** die Laminierungszwischenschicht aus gegebenenfalls akustischem und/oder keilförmigem Poly(vinylbutyral) (PVB), insbesondere für eine Windschutzscheibe, oder einem Verbundelement aus PVB-/funktioneller Kunststofffolie oder PVB/funktioneller Kunststofffolie/PVB besteht, wobei die funktionelle Kunststofffolie, vorzugsweise ein PET, eine funktionelle, insbesondere elektrisch leitende Schicht trägt, wobei die Kunststofffolie sich insbesondere zwischen dem Sackloch und der Fläche Fw befindet oder die Fläche Fw sich zwischen dem Sackloch und der Kunststofffolie befindet.

5. Fahrzeugverglasung mit Leuchtanzeige nach einem der vorstehenden Ansprüche, **dadurch gekennzeichnet, dass** die Laminierungszwischenschicht für jede Diode das Sackloch (20) auf einer der Fläche Fw gegenüberliegenden Fläche F' umfasst, das die Diode beherbergt, wobei das Sackloch eine Größe von höchstens 20 mm und sogar höchstens 15 mm aufweist.

6. Fahrzeugverglasung mit Leuchtanzeige nach einem der vorstehenden Ansprüche, **dadurch gekennzeichnet, dass** die Laminierungszwischenschicht (2) aus PVB eine Dicke von 0,5 bis 0,9 mm aufweist, wobei die Diode(n) (4) Komponenten sind, die auf der Oberfläche eines Diodenträgers montiert sind, vorzugsweise auf einer Vorderseite eines flexiblen Diodenträgers wie einer PCB-Leiterplatte, mit einer Dicke e'2 von vorzugsweise höchstens 0,15 mm, wobei die PCB-Leiterplatte sich vorzugsweise bis zum Rand der Verbundverglasung erstreckt und aus dem Rand der Verglasung herausragt.

7. Fahrzeugverglasung mit Leuchtanzeige nach einem der vorstehenden Ansprüche, **dadurch gekennzeichnet, dass** die Diode(n) (4) Komponenten sind, die auf der Oberfläche eines Diodenträgers montiert sind, vorzugsweise auf einer Vorderseite eines flexiblen Diodenträgers, dessen Rückseite mit einem Klebstoff (6) mit einer Dicke e3 von ≤ 0,1 mm, vorzugsweise e3 von ≤ 0,05 mm, gegen die Fläche F2 für die Windschutzscheibe oder gegen die Fläche F3 für die Heckscheibe oder die Seitenverglasung geklebt oder gedrückt wird, wobei sich der Diodenträger vorzugsweise bis zum Rand der Verbundverglasung erstreckt und aus dem Rand der Verglasung herausragt.

8. Fahrzeugverglasung mit Leuchtanzeige nach einem der Ansprüche 1 bis 7, **dadurch gekennzeichnet, dass** die Diode(n) (4) Komponenten sind, die auf der Oberfläche eines Diodenträgers montiert sind, vorzugsweise auf einer Vorderseite eines flexiblen Diodenträgers, wobei sich eine Laminierungszwischenschicht auch zwischen der Rückseite des Diodenträgers und der Fläche F2 der Windschutzscheibe befindet, oder dadurch, dass sich eine Laminierungszwischenschicht auch zwischen der Rückseite des Diodenträgers und der Fläche F3 der Heckscheibe oder der Seitenscheibe befindet.

9. Fahrzeugverglasung mit Leuchtanzeige nach einem der vorstehenden Ansprüche, **dadurch gekennzeichnet, dass** die Diode(n) (4) Komponenten sind, die auf der Oberfläche eines Diodenträgers montiert sind, vorzugsweise auf einer Vorderseite eines flexiblen Diodenträgers, wobei der Diodenträger eine Kunststofffolie, vorzugsweise aus Poly(ethylenterephthalat) oder Polyimid, umfasst, die mit vorzugsweise transparenten leitenden Spuren versehen ist, wobei sich der Diodenträger vorzugsweise bis zum Rand der Verbundverglasung erstreckt und aus dem Rand der Verglasung herausragt.

10. Fahrzeugverglasung mit Leuchtanzeige nach einem der vorstehenden Ansprüche, **dadurch gekennzeichnet, dass** die Diode(n) (4) Komponenten sind, die auf der Oberfläche eines flexiblen Diodenträgers montiert sind, wobei der flexible Diodenträger in einem Bereich der Windschutzscheibe angeordnet ist, in dem die Außenverglasung dank einer opaken Schicht insbesondere aus Email opak ist, vorzugsweise auf der Fläche F2, und/oder in dem die Innenverglasung dank einer opaken Schicht insbesondere aus Email opak ist, vorzugsweise auf der Fläche F4, und somit mindestens Öffnungen auf Höhe der Dioden aufweist, oder **dadurch, dass** der flexible Diodenträger in einem Bereich der Heckscheibe oder der Seitenscheibe angeordnet ist, in dem die Innenverglasung dank einer opaken Schicht insbesondere aus Email opak ist, vorzugsweise auf der Fläche F4, und/oder in dem die Außenverglasung dank einer opaken Schicht insbesondere aus Email opak ist, vorzugsweise auf der Fläche F2, und somit mindestens Öffnungen auf Höhe der Dioden aufweist.

11. Fahrzeugverglasung mit Leuchtanzeige nach einem der vorstehenden Ansprüche, **dadurch gekennzeichnet, dass** die Diode(n) (4) Komponenten sind, die auf der Oberfläche eines flexiblen Diodenträgers montiert sind, wobei der flexible Diodenträger sich mindestens bis zum Rand (10) der ersten Verglasung (1) erstreckt und vorzugsweise über den Rand herausragt, und zwischen der Rückseite (30') des flexiblen Diodenträgers und der Fläche F2 der Windschutzscheibe oder der Fläche F3 der Heckscheibe oder der Seitenscheibe sich ein Klebstoff (6) befindet, der gegen Flüssigwasser wasserdicht ist, vorzugsweise ein doppelseitiger Klebstoff, mit einer Dicke von höchstens 0,1 mm und vorzugsweise höchstens 0,05 mm.

12. Fahrzeugverglasung mit Leuchtanzeige nach einem der vorstehenden Ansprüche, **dadurch gekennzeichnet, dass** die Diode oder eine der Dioden ein Leuchtmelder eines vorzugsweise kapazitiven taktilen Schalters zwischen den Flächen F2 und F3 oder auf der Fläche F4 ist.

13. Fahrzeug, das mindestens eine Verglasung mit Leuchtanzeige nach einem der vorstehenden Ansprüche umfasst, **dadurch gekennzeichnet, dass** die Verglasung mit Leuchtanzeige, welche die Windschutzscheibe bildet, eine Verglasung ist, deren Anzeigelicht ein Mittel zur Vermeidung von Kollisionen ist, oder dass die Verglasung mit Leuchtanzeige, welche die Heckscheibe bildet, eine Verglasung ist, die eine Bremsleuchte, insbesondere eine dritte Bremsleuchte einschließt, oder dass die Verglasung mit Leuchtanzeige, welche die Seitenscheibe bildet, eine Verglasung ist, die ein Warnblinklicht oder ein Fahrzeugstandlicht oder eine Zusatzblinkleuchte einschließt.

14. Verfahren zur Herstellung einer Verglasung mit Leuchtanzeige nach einem der vorstehenden Ansprüche der Verglasung, **dadurch gekennzeichnet, dass** das Verfahren die folgenden Schritte umfasst:
- automatisches Schneiden einer die Drähte aufweisenden Laminierungszwischenschicht in Form einer ersten thermoplastischen Folie mit einer Dicke von höchstens 0,9 mm, um das lokale Sackloch bzw. die lokalen Sacklöcher zu bilden,
- Zusammensetzen der Verbundverglasung, insbesondere mit den Sacklöchern, die größer als die Größe der Dioden sind, vorzugsweise größer als höchstens 0,5 mm oder sogar höchstens 0,1 mm.

15. Verfahren zur Herstellung der Verglasung mit Leuchtanzeige nach dem vorstehenden Anspruch, **dadurch gekennzeichnet, dass** die Diode(n) (4) Komponenten sind, die auf der Oberfläche eines Diodenträgers montiert sind, vorzugsweise auf einer Vorderseite eines flexiblen Diodenträgers, mit der Vorderseite gegen die erste thermoplastische Folie.

16. Verfahren zur Herstellung der Verglasung mit Leuchtanzeige nach Anspruch 14 oder 15, **dadurch gekennzeichnet, dass** die erste Folie aus PVB ist, die elektrisch leitenden Drähte mit einer anderen Folie, die vorzugsweise PVB ist, in Kontakt sind oder vorzugsweise mit der Fläche F3 für die Windschutzscheibe oder vorzugsweise mit der Fläche F2 für die Lunette oder die Seitenverglasung in Kontakt sind.

17. Verfahren zur Herstellung der Verglasung mit Leuchtanzeige nach Anspruch 14 oder 15, **dadurch gekennzeichnet, dass** die erste Folie aus gegebenenfalls akustischem und/oder keilförmigem PVB ist, oder eine vormontierte Mehrschichtfolie aus PVB-/Kunststofffolie wie funktionellem PET oder PVB/Kunststofffolie wie sogenanntem funktionellem PET, umfassend vorzugsweise eine elektrisch leitende Schicht/PVB, wobei die Drähte sich gegebenenfalls auf einer freien Oberfläche des Vormontierten befinden, wobei insbesondere die Kunststofffolie sich zwischen dem Sackloch und der Fläche Fw befindet oder die Fläche Fw sich zwischen dem Sackloch und der Kunststofffolie befindet.

18. Verfahren zur Herstellung der Verglasung mit Leuchtanzeige nach Anspruch 17, **dadurch gekennzeichnet, dass** die erste Folie eine vormontierte Mehrschichtfolie aus PVB/Kunststofffolie, umfassend eine elektrisch leitende Schicht/PVB ist, wobei das Sackloch bzw. die Sacklöcher in der PVB hergestellt werden, ohne die elektrisch leitende Schicht zu erreichen, und vorzugsweise ohne die Kunststofffolie zu erreichen, wobei die Drähte sich gegebenenfalls auf einer freien Oberfläche des Vormontierten befinden, wobei insbesondere die Kunststofffolie sich zwischen dem Sackloch und der Fläche Fw befindet oder die Fläche Fw sich zwischen dem Sackloch und der Kunststofffolie befindet.

19. Verfahren zur Herstellung der Verglasung mit Leuchtanzeige nach einem der Ansprüche 14 bis 18, **dadurch gekennzeichnet, dass** für die Windschutzscheibe die Fläche FA die Fläche F' ist und vorzugsweise mit der Fläche F2 in Klebekontakt ist und/oder die Fläche Fw die Fläche FB ist, die vorzugsweise mit der Fläche F3 in Klebekontakt ist, oder dadurch, dass für die Seitenscheibe oder die Lunette die Fläche FA die Fläche Fw ist und vorzugsweise mit der Fläche F2 in Klebekontakt ist und/oder die Fläche FB die Fläche F' ist, die vorzugsweise mit der Fläche F3 in Klebekontakt ist.

20. Verfahren zur Herstellung der Verglasung mit Leuchtanzeige nach einem der Ansprüche 14 bis 18, **dadurch gekennzeichnet, dass** die Diode(n) (4) Komponenten sind, die auf der Oberfläche eines insbesondere flexiblen Diodenträgers mit einer Dicke e'2 von höchstens 0,2 mm montiert sind, auf einer Vorderseite des flexiblen Diodenträgers, die gegen die Fläche F' ist, montiert sind und der Diodenträger vorzugsweise über den Rand der Verbundverglasung herausragt.

## Claims

1. An automotive luminous signaling glazing forming a vehicle front windshield (1000, 1000') comprising:
- a laminated glazing including:
- a first glazing (1) made of mineral glass, forming an exterior glazing, with first and second main faces (11, 12) called face F1 and face F2, respectively;
- a second glazing (1') made of mineral glass, forming an interior glazing, with third and fourth main faces (13, 14) called face F3 and face F4, respectively;
- between the face F2 and face F3, which are the internal faces of the laminated glazing:
- a lamination interlayer (2) made of a thermoplastic polymeric material, said interlayer having a main face FA face F2 side and a main face FB face F3 side and in particular a thickness e1; and
- at least one inorganic light-emitting diode and preferably a set of inorganic light-emitting diodes (4) each diode being of submillimeter-sized thickness e2 and of preferably at least 0.2 mm, each diode being able to emit signaling light in the direction of the face F3, and each diode having an edge face, the lamination interlayer comprising an aperture (20);
**characterized in that**, the glazing furthermore includes a set of electrically conductive wires anchored on a face called Fw of the lamination interlayer, which is either the face FA or the face FB,
and **in that**,
for each diode, the lamination interlayer comprises, on the face opposite the face Fw, called face F', an aperture (20) that is blind, housing the diode,
and/or, for a group of diodes, the lamination interlayer comprises, on the face opposite the face Fw, called face F', an aperture (20) that is blind and common, housing said group of diodes,
the remaining thickness Hf of the lamination interlayer, between Fw and the bottom of the blind aperture, preferably being at least 0.1 mm,
and the diodes preferably making contact with the bottom of the blind aperture or being spaced apart from the bottom by at most 0.2 mm or at most 0.1 mm.

2. An automotive luminous signaling glazing, chosen from a rear windshield (2000) and a door glass, comprising:
- a laminated glazing including:
- a first glazing, forming the exterior glazing, with first and second main faces (11) respectively called face F1 and face F2;
- a lamination interlayer made of a polymeric thermoplastic;
- a second glazing 1', forming the interior glazing, with third and fourth main faces called face F3 and face F4, respectively;
- between the face F2 and the face F3, which are the internal faces of the laminated glazing, a lamination interlayer (2) made of a thermoplastic polymeric material, said interlayer having a main face FA face F2 side and a main face FB face F3 side, and in particular a thickness e1; and
- at least one inorganic light-emitting diode and preferably a set of inorganic light-emitting diodes (4), each diode being of submillimeter-sized thickness e2 of preferably at least 0.2 mm,
each diode being able to emit signaling light in the direction of the face F2, the lamination interlayer comprising an aperture (20);
**characterized in that**,
the glazing furthermore includes a set of electrically conductive wires anchored on a face called Fw of the lamination interlayer, which is either the face FA or the face FB,
and **in that**,
for each diode, the lamination interlayer comprises, on the face opposite the face Fw, called face F', a blind aperture (20) housing the diode,
and/or, for a group of diodes, the lamination interlayer comprises, on the face opposite the face Fw, called face F', a blind and common aperture (20) housing said group of diodes, the remaining thickness Hf of the lamination interlayer, between Fw and the bottom of the blind aperture, preferably being at least 0.1 mm,
and the front surface of the diode preferably making contact with the bottom of the blind aperture or spaced apart from the bottom by at most 0.2 mm or at most 0.1 mm.

3. The automotive luminous signaling glazing as claimed in one of the preceding claims, **characterized in that** the walls of a blind aperture of the lamination interlayer (2) are spaced apart by at most 0.5 mm and better still at most 0.1 mm from the edge face of the diode (4) and even make contact with the edge face of the diode and/or the walls of a common blind aperture of the lamination interlayer (2) are spaced apart by at most 0.5 mm and better still at most 0.1 mm from the group of diodes (4) and even make contact with the edge face of the diodes.

4. The automotive luminous signaling glazing as claimed in one of the preceding claims, **characterized in that** the lamination interlayer is made of optionally acoustic and/or wedge-shaped polyvinyl butyral (PVB), in particular for a front windshield, or even a composite PVB/plastic functional film or PVB/plastic functional film/PVB element, the plastic functional film, preferably a PET, bearing a particularly electrically conductive functional layer, the plastic film is in particular between the blind aperture and the face Fw or the face Fw is between the blind hole and the plastic film.

5. The automotive luminous signaling glazing as claimed in one of the preceding claims, **characterized in that** for each diode, the lamination interlayer comprises on the face opposite the face Fw, called face F', said aperture (20) that is blind, housing the diode, and the blind aperture is of width of at most 20 mm and even of at most 15 mm.

6. The automotive luminous signaling glazing as claimed in one of the preceding claims, **characterized in that** the lamination interlayer (2) is made of PVB with a thickness ranging from 0.5 to 0.9 mm, the one or more diodes (4) are surface mount devices mounted on a diode carrier, preferably on a front face of a flexible diode carrier, such as a PCB board, of thickness e'2 of preferably of at most 0.15 mm, the PCB board preferably extending as far as to the edge face of the laminated glazing and protruding from the edge face of the glazing.

7. The automotive luminous signaling glazing as claimed in any one of the preceding claims, **characterized in that** the one or more diodes (4) are surface mount devices mounted on a diode carrier, preferably on a front face of a flexible diode carrier, the back face of which is adhesively bonded or held against the face F2 for the front windshield or against the face F3 for the rear windshield or side window, the adhesive bonding being with an adhesive (6) of thickness e3≤0.1 mm, better still e3≤0.05 mm, the diode carrier preferably extending as far as to the edge face of the laminated glazing and protruding from the edge face of the glazing.

8. The automotive luminous signaling glazing as claimed in one of claims 1 to 7, **characterized in that** the one or more diodes (4) are surface mount devices mounted on a diode carrier, preferably on a front face of a flexible diode carrier, a lamination interlayer is also between the back face of the diode carrier and the face F2 of the front windshield or **in that** a lamination interlayer is also between the back face of the diode carrier and the face F3 of the rear windshield or door glass.

9. The automotive luminous signaling glazing as claimed in any one of the preceding claims, **characterized in that** the one or more diodes (4) are surface mount devices mounted on a diode carrier, preferably on a front face of a flexible diode carrier, the diode carrier includes a film made of plastic, preferably of polyethylene terephthalate or polyimide, provided with preferably transparent conductive tracks, the diode carrier preferably extends as far as to the edge face of the laminated glazing and protrudes from the edge face of the glazing.

10. The automotive luminous signaling glazing as claimed in any one of the preceding claims, **characterized in that** the one or more diodes (4) are surface mount devices mounted on a face of a flexible diode carrier, the flexible diode carrier is placed in a region of the front windshield, region in which the exterior glazing is rendered opaque by an opaque layer, in particular made of enamel, preferably on face F2 and/or in which the interior glazing is rendered opaque by an opaque layer, in particular made of enamel, preferably on face F4 and then including at least apertures in line with the diodes or **in that** the flexible diode carrier is placed in a region of the rear windshield or of the door glass, region in which the interior glazing is rendered opaque by an opaque layer, in particular made of enamel, preferably on face F4 and/or in which the exterior glazing is rendered opaque by an opaque layer, in particular made of enamel, preferably on face F2 and then including apertures at least in line with the diodes.

11. The automotive luminous signaling glazing as claimed in one of the preceding claims, **characterized in that** the one or more diodes (4) are surface mount devices mounted on a face called the front face of a flexible diode carrier, the flexible diode carrier extends at least as far as to the edge face (10) of the first glazing (1) and preferably protrudes from the edge face, and between the back face (30') of the flexible diode carrier and the face F2 of the front windshield or the face F3 of the rear windshield or of the door glass, is housed an adhesive (6) that is tight to liquid water and of thickness of at most 0.1 mm and better still at most 0.05 mm, in particular a double-sided adhesive.

12. The automotive luminous signaling glazing as claimed in one of the preceding claims, **characterized in that** the diode or one of the diodes is a luminous indicator of a preferably capacitive touch on/off switch between faces F2 and F3 or on the face F4.

13. A vehicle including at least one luminous signaling glazing as claimed in any one of the preceding claims, **characterized in that**, the luminous signaling glazing forming front windshield is a glazing in which the signaling light is an anti-collision means, or the luminous signaling glazing forming rear windshield is a glazing including a stop light, notably a third stop light, or the luminous signaling glazing forming a side window is a glazing including a hazard warning light or a light for locating the vehicle or a side repeater.

14. A process for manufacturing the luminous signaling glazing as claimed in one of the preceding claims, **characterized in that** it includes the following steps:
- automatically cutting the lamination interlayer carrying said wires in the form of a first thermoplastic sheet of thickness of at most 0.9 mm in order to form the one or more local blind apertures;
assembling the laminated glazing, in particular with blind apertures larger than the size of the diodes preferably larger by at most 0.5 mm or even by at most 0.1 mm.

15. The process for manufacturing the luminous signaling glazing as claimed in the preceding claim, **characterized in that** the one or more diodes (4) are surface mount devices mounted on a diode carrier, preferably on a front face of a flexible diode carrier, with the front face against the first thermoplastic sheet.

16. The process for manufacturing the luminous signaling glazing as claimed in claim 14 or 15, **characterized in that** the first sheet is made of PVB and the electrically conductive wires make contact with another preferably PVB leaf or make contact with the face F3 for the front windshield preferably or F2 for the rear windshield or the side window preferably.

17. The process for manufacturing the luminous signaling glazing as claimed in claim 14 or 15, **characterized in that** the first sheet is made of optionally acoustic and/or wedge-shaped PVB or is a preassembled multileaf consisting of a PVB/plastic film such as functional PET film or a PVB/plastic film such as so-called functional PET film preferably including an electrically conductive layer/PVB, the wires optionally being on a free surface of the preassembled multileaf, the plastic film in particular is between the blind aperture and the face Fw or the face Fw is between the blind hole and the plastic film.

18. The process for manufacturing the luminous signaling glazing as claimed in claim 17, **characterized in that** the first sheet is a preassembled multileaf consisting of a PVB/plastic film including an electrically conductive layer/PVB, and the one or more blind apertures are produced in the PVB without reaching the electrically conductive layer and preferably without reaching the plastic film, the wires optionally being on a free surface of the preassembled multileaf, the plastic film is in particular between the blind aperture and the face Fw or the face Fw is between the blind hole and the plastic film.

19. The process for manufacturing the luminous signaling glazing as claimed in one of claims 14 to 18, **characterized in that** for the front windshield, the face FA is the face F' and preferably makes adhesive contact with the face F2 and/or the face Fw is the face FB, which preferably makes adhesive contact with the face F3, or **in that** for the door glass or the rear windshield the face FA is the face Fw and preferably makes adhesive contact with the face F2 and/or the face FB is the face F', which preferably makes adhesive contact with the face F3.

20. The process for manufacturing the luminous signaling glazing as claimed in one of claims 14 to 18, **characterized in that** the one or more diodes (4) are surface mount devices mounted on an in particular flexible diode carrier of thickness e'2 of at most 0.2 mm, said diodes being mounted on a front face of the flexible diode carrier, which is against the face F' and preferably the diode carrier protrudes from the edge face of the laminated glazing.
